# EUROPEAN PATENT SPECIFICATION

(11) **EP 3 856 622 B1**
(45) Date of publication and mention of the grant of the patent: **02.11.2022**
(21) Application number: 19783713.1
(22) Date of filing: 26.09.2019
(51) Int. Cl.: B62K 5/027, B62D 7/22, B62K 5/05, B62K 5/08, B62K 5/10, B62K 25/16

(54) **FORECARRIAGE FOR MOTOR VEHICLES WITH TWO FRONT STEERED WHEELS, WITH DOUBLE STEERING BAR AND MOTOR VEHICLE COMPRISING SAID FORECARRIAGE**
VORBAU FÜR KRAFTFAHRZEUGE MIT ZWEI GELENKTEN VORDERRÄDERN, MIT DOPPELLENKER UND KRAFTFAHRZEUG MIT DIESEM VORBAU
AVANT-TRAIN POUR VÉHICULES À MOTEUR À DEUX ROUES DIRECTRICES AVANT, À DOUBLE BARRE DE DIRECTION ET VÉHICULE À MOTEUR COMPRENANT LEDIT AVANT-TRAIN

(30) Priority: 28.09.2018 IT 201800009016
(43) Date of publication of application: 04.08.2021
(73) Proprietor: Piaggio & C. S.P.A., 56025 Pontedera Pisa (IT)
(72) Inventor: RAFFAELLI, Andrea, 56025 Pontedera (PI) (IT)
(74) Representative: Mannucci, Michele
(86) International application number: PCT/IB2019/058181
(87) International publication number: WO 2020/065578

(56) References cited:
- EP-A1- 3 153 388
- EP-A2- 3 222 508
- WO-A1-2017/115295
- CN-A- 106 143 734
- JP-A- H0 245 287
- US-A1- 2010 194 068
- US-B1- 7 708 291

## Description

### TECHNICAL FIELD

The present invention relates to the field of tilting motor vehicles, i.e., vehicles provided with a tilting movement around a median plane which extends longitudinally along the vehicle. Tilting motor vehicles are typically three-wheeled motorcycles, with two front steered wheels and one rear driving wheel. The tilting movement allows the motor vehicle to tilt during driving, for example when traveling a curve.

### BACKGROUND ART

In the field of motor vehicles there is an increasing offer of "hybrid" vehicles, which combine the peculiarities of motorcycles, in terms of maneuverability, with the stability of four-wheeled vehicles.

These models are represented, for example, by three-wheeled motor vehicles provided with two front steered wheels and with one rear driving wheel, and by four-wheeled motor vehicles, typically called quad-bikes.

More in detail, the three-wheeled motor vehicles mentioned above are provided with two front steered wheels, i.e., adapted to steer the vehicle, controlled by the driver by means of the handlebar, and tilting, i.e., laterally tiltable with a leaning movement, in other terms a pivoting movement around an axis substantially oriented in the direction of travel. Three-wheeled vehicles also comprise a rear driving wheel, drivingly coupled to the engine and having the purpose of providing the torque and hence of allowing drive, while the front coupled wheels have the purpose of providing the directionality of the vehicle.

The coupled front wheels can tilt as well as steer. Due to this solution, with respect to a motor vehicle with only two wheels, motor vehicles with two wheels coupled to the forecarriage have greater stability guaranteed by the two front wheels that rest on the ground, similarly to the stability provided by an automobile.

The front wheels are kinematically connected to one another through kinematic mechanisms that ensure that these wheels tilt and steer synchronously, for example through the interposition of four-bar linkages which connect the front wheels to a forecarriage frame. Moreover, these motor vehicles are provided with two independent shock absorber assemblies, one for each front driving wheel. Each shock absorber assembly is provided with an elastic element (spring) and a viscous element (damper or brake).

Three-wheeled tilting motor vehicles therefore aim to guarantee the user easy handling of a two-wheeled motorcycle and, at the same time, the stability and safety of a four-wheeled motor vehicle.

A three-wheeled tilting motor vehicle of this type is described, for example, in WO-2017/115294, WO-2017/115295, WO-2017/115296, 2017/115297. CN 106143734 A discloses the preamble of claim 1.

One of the critical aspects of vehicles of this type consists in the fact that in certain driving conditions, for example in transitory phases after the vehicle passes over an obstacle, the two steered front wheels can be subject to up-and-down movements that differ from one another. The kinematic steering mechanism that connects the two steered wheels can induce a steering movement of one wheel as a consequence of an unequal up-and-down movement for the two wheels, for example when a wheel encounters a dip or a bump in the ground. In given conditions this might be perceived as a defect by the driver.

Therefore, there is a need to provide a kinematic steering mechanism for vehicles of this type that overcomes or alleviates the problems of the current state of the art.

### SUMMARY

According to the invention there is provided a forecarriage for vehicles with at least two front steered wheels, typically vehicles with three wheels, comprising a forecarriage frame with which a steering column tube, connected to the forecarriage frame, is integral. The forecarriage further comprises a four-bar linkage connected to the forecarriage frame that supports, by means of a first supporting member and a second supporting member, respectively a first front wheel and a second front wheel. A steering column is rotatingly housed in the steering column tube and is connected to a first connecting bar, which connects the first supporting member and the second supporting member to one another. A suspension system allows the sussultatory movement, i.e. the up-and-down movement of the first front wheel and of the second front wheel with respect to the four-bar linkage. The first connecting bar has a first end connected to the first supporting member and a second end connected to the second supporting member. The first connecting bar a variable length and a second connecting bar connects the first supporting member and the second supporting member to one another. The second connecting bar is connected at points which are neutral with respect to the up-and-down movements of the first front wheel and of the second front wheel. The neutral points with respect to the up-and-down movements of the first front wheel and of the second front wheel are points, the mutual distance whereof is constant and does not change as a consequence of the up-and-down movements of the front wheels.

In this way the length of the first connecting bar can vary when the first front wheel and the second front wheel perform different up-and-down movements. The elongation and contraction of the first connecting bar in case of up-and-down movements different from one another for the two wheels ensures that the movement of one supporting member does not cause a differentiated steering movement of the wheel supported by the other supporting member.

According to embodiments described herein, there is provided a forecarriage of a motor vehicle comprising a forecarriage frame and a four-bar linkage connected to the forecarriage frame. The four-bar linkage supports, by means of a first supporting member and a second supporting member, a first front wheel and a second front wheel respectively. The first supporting member and the second supporting member are movable, independently from one another, with respect to the four-bar linkage, to allow an up-and-down movement of the first front wheel and of the second front wheel. Up-and-down movement is in substance the movement of the wheel due to a reaction force received from the ground over which the vehicle travels. The first supporting member and the second supporting member can move simultaneously, with respect to the four-bar linkage to perform a steering movement of the first and of the second front wheel. The steering movement can differ for the two wheels and, in a known manner, in general the wheel on the inside of the curve performs a larger steering movement than the wheel on the outside of the curve. There is also provided a steering column tube, connected to the forecarriage frame. The forecarriage comprises a steering column rotatingly housed in the steering column tube and connected to a kinematic steering mechanism configured to control steering of the first front wheel and of the second front wheel. A suspension system connected between the front wheels and the frame allows the up-and-down movement of the first and of the second front wheel with respect to the four-bar linkage. The kinematic steering mechanism comprises a first connecting bar that connects the first supporting member and the second supporting member and follows the up-and-down movement of the first and of the second front wheel. Characteristically, the first connecting bar has a variable length and the kinematic steering mechanism comprises a second connecting bar connecting the first supporting member and the second supporting member of the two front wheels to one another. The second connecting bar is connected at points which are neutral with respect to the up-and-down movements of the first front wheel and of the second front wheel. Point which is neutral means a point that is not influenced by the up-and-down movement of the wheel with respect to the forecarriage frame.

The first connecting bar can comprise at least two bar portions connected to one another so as to be able to rotate one with respect to the other around a longitudinal axis of the connecting bar. In other embodiments, the first connecting bar can consist of more than two, for example three, portions hinged to one another so as to be rotatable around a longitudinal axis of the connecting bar, i.e., an axis that extends according to the longitudinal direction of the first connecting bar. Mutual connection between the parts into which the first connecting bar is divided can be obtained by sliding bearings and/or roller bearings. At least one of the bearings also allows axial sliding, to obtain the variation in length of the first connecting bar.

In some embodiments, also the second connecting bar can consist of two or more portions or sections hinged to one another around a longitudinal axis, i.e. parallel to the direction in length of the second connecting bar. In this case the two or more portions of which the second connecting bar is made are joined to one another by members, for example bearings, which allow a mutual rotation but not a length variation . In other words, the length of the second connecting bar remains fixed.

According to another aspect, there is provided a motor vehicle comprising a rear section with at least one driving wheel and a forecarriage as defined above.

Further advantageous features and embodiments of the forecarriage and of the vehicle comprising it are illustrated hereunder and defined in the appended claims, which form an integral part of the present description.

### BRIEF DESCRIPTION OF THE DRAWINGS

The invention will be better understood by following the description and the accompanying drawings, which illustrate an exemplifying and non-limiting embodiment of the invention. More particularly, in the drawings:
Fig.1 shows a simplified kinematic diagram of a forecarriage according to the present disclosure, in a first embodiment,
Fig.2 shows a simplified kinematic diagram of a forecarriage according to the present disclosure, in a second embodiment;
Fig.3 shows a simplified kinematic diagram of a forecarriage according to the present disclosure, in a third embodiment;
Fig.4 shows a side view of a three-wheeled scooter according to an embodiment;
Fig. 5 shows a plan view according to V-V of Fig. 4;
Fig. 6 shows a front view according to VI-VI of Fig. 4;
Fig.7 shows a bottom isometric view of the scooter of Figs. 4 to 6;
Figs. 8 and 9 show front and rear isometric views, respectively, with parts removed of the kinematic steering mechanism of the scooter of Figs. 4 to 7;
Fig.10 shows a front view of the steering column and of the kinematic steering mechanism connected thereto isolated from the frame of the forecarriage and without wheels;
Fig. 11 shows a section according to XI-XI of Fig. 10;
Fig.12 shows a view according to XII-XII of Fig.10;
Figs. 13 and 14 show sections according to XIII-XIII and XIV-XIV of Fig.11;
Figs. 15 and 16 show isometric views of the steering column and of the kinematic steering mechanism of Figs. 10 to 14;
Figs.17 and 18 show inside views of the right wheel of the vehicle of the Figs. 4 to 16;
Fig.19 shows a side view, according to XIX-XIX of Fig.20, of an upright of the four-bar linkage of the kinematic steering mechanism of Figs. 4 to 18, on which the respective connecting sleeve of the supporting member of the respective wheel is mounted;
Fig.20 shows a rear view according to XX-XX of Fig. 19;
Fig. 21 shows a section according to XXI-XXI of Fig.20;
Fig.22 shows an exploded isometric view of the upright of Figs. 19 to 21;
Fig.23 shows a side view of a three-wheeled scooter according to a further embodiment;
Fig. 24 shows a plan view according to XXIV-XXIV of Fig. 23;
Fig.25 shows a front view according to XXV-XXV of Fig. 23;
Fig.26 shows a bottom isometric view of the scooter of Figs. 23 to 25;
Fig.27 shows a front view of the steering column and of the kinematic steering mechanism connected thereto isolated from the frame of the forecarriage and without wheels;
Fig. 28 shows a section according to XXVIII-XXVIII of Fig. 27;
Fig.29 shows a view according to XXIX-XXIX of Fig.27;
Fig.30 shows a section according to XXX-XXX of Fig.28;
Fig.31 shows a section according to XXXI-XXXI of Fig.28;
Figs. 32 and 33 show isometric views of the steering column and of the kinematic steering mechanism of Figs. 27 to 31;
Figs. 34 and 35 show enlarged isometric views, with parts removed, of the forecarriage and of the kinematic steering mechanism of the scooter of Figs. 23 to 33, according to two distinct angles, and more precisely from the rear side and from the front side;
Figs. 36 and 37 show inside views of the right wheel of the vehicle of Figs. 23 to 35.

### DETAILED DESCRIPTION OF EMBODIMENTS

### Kinematic diagrams of the kinematic steering mechanisms

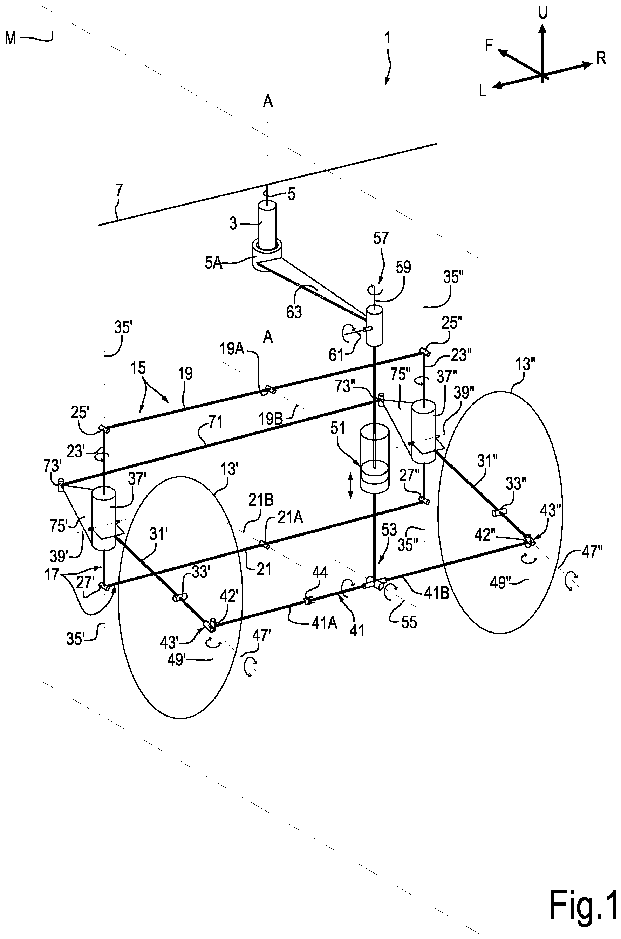

For a better understanding of the novel features of the various embodiments of forecarriages according to the present invention and of the motor vehicle that uses them, before illustrating concrete embodiments of the forecarriage and of the related motor vehicle that uses it, conceptual kinematic diagrams illustrating the fundamental components of the forecarriage, and their operating method, will be described. The simplified kinematic diagrams which will be referred to initially are illustrated in Figs. 1, 2 and 3.

For greater clarity of the drawings, where appropriate, arrows have been added to the accompanying figures to indicate the orientation in space, referring to a position of normal use of the vehicle. In this sense, the arrow U indicates an upward vertical direction, the arrow D indicates a downward vertical direction; the arrows L and R indicate a horizontal direction, respectively "left" and "right" of the vehicle, with respect to the direction of forward travel. The arrow F indicates the horizontal direction, according to the direction of travel.

Fig.1 shows a kinematic diagram of a forecarriage for a motor vehicle, in particular a tilting motor vehicle, for example a motorcycle with two front steered wheels and a rear section, comprising for example one or two fixed axle, i.e., non-steered, driving wheels. The rear section is not shown in Fig.1.

The forecarriage is indicated as a whole with 1. It has a forecarriage frame, not shown in Fig.1, with which a steering column tube 3 is integral. A steering column 5 integral with a handlebar or steering wheel 7 is rotatingly mounted in the steering column tube 3. The steering column 5 is rotatable around an axis of A-A upon control of the driver by means of the handlebar 7.

A first front steered wheel 13' and a second front steered wheel 13" are associated with the forecarriage 1. Hereinafter, components, assemblies or elements symmetrical with respect to a center-line plane M of the forecarriage 1 are indicated with the same reference number followed by one apostrophe ' for elements on one side of the center-line plane M, for example the left side of the driver, and with two apostrophes " for elements on the other side of the center-line plane M, for example the right side of the driver.

In the embodiment of Fig.1 the forecarriage 1 has a kinematic mechanism, indicated as a whole with 15, which allows the front steered wheels 13' and 13" to follow synchronous steering and tilting movements, the latter being the movement that allows the motor vehicle on which the forecarriage 1 is mounted to tilt, for

### example on a curve.

In particular, the kinematic steering mechanism 15 comprises a four-bar linkage 17 which has a first upper cross member 19 and a second lower cross member 21, substantially parallel to one another. The two cross members 19, 21 are hinged to the frame (not shown) of the forecarriage 1 in 19A and 21A by means of respective hinges. In this way, the two cross members 19 and 21 are rotatable around respective parallel axes of rotation lying on the center-line plane M of the forecarriage frame. The axes are indicated with 19B and 21B, respectively. Moreover, the four-bar linkage 17 comprises two uprights 23' and 23" on the two sides of the forecarriage 1. The reference numbers 25', 27' and 25", 27" indicate hinges on the two sides of the forecarriage 1, with which the uprights 23' and 23" are hinged to the cross members 19, 21 The hinges 25', 25" and 27', 27" define mutual rotation axes of the cross members 19, 21 and of uprights 23', 23", which are parallel to the rotation axes 19B and 21B of the cross members 19, 21 with respect to the forecarriage frame.

The kinematic mechanism 15 comprises, besides the four-bar linkage 17, a pair of supporting members indicated with 31' and 31", which rotatingly support the wheels 13' and 13", respectively. In the simplified diagram of Fig.1, the supporting members 31', 31" are schematically represented by rectilinear beams purely for illustrative purposes. Each supporting member 31', 31" supports the rotation pin 33', 33" of the respective wheel 13', 13" and other mechanical components, for example the brakes, not shown in the simplified kinematic diagram of Fig.1.

Each supporting member 31', 31" is connected to the respective upright 23', 23" of the four-bar linkage 17. The connection between upright 23', 23" and supporting member 31', 31" is such that the supporting member is rotatable around a steering axis 35', 35" of the respective wheel 13', 13". In the diagram of Fig.1, each steering axis 35', 35" coincides with a longitudinal axis of the respective upright 23', 23", i.e., with an axis extending parallel to the prevalent longitudinal direction of the upright 23', 23". Mutual rotation between upright 23', 23" and supporting member 31', 31" can be obtained, for example, by means of a sleeve 37', 37" mounted around the upright 23', 23" and to which the respective supporting member 31', 31" is in turn connected, with the possibility of a relative movement between supporting member and sleeve, described hereunder.

In the embodiment of Fig.1, each supporting member 31', 31" is connected to the upright (and more precisely to the sleeve 37' 37") so as to be able to perform a rotation or roto-translation motion with respect to the upright in a plane that, when the vehicle is in neutral position (i.e., vertical without tilt due to leaning), it is in vertical position. In the simplified kinematic diagram of Fig.1, the movement of each supporting member 31', 31" is represented as a rotation or pivoting movement around an axis 39', 39", also definable as springing axis, orthogonal to the steering axis 35' 35". In practice, in the diagram of Fig.1 each supporting member 31', 31" is therefore connected to the respective sleeve 37', 37" by means of a hinge with a horizontal axis, when the motor vehicle and the forecarriage 1 thereof are in neutral position, with zero tilting angle. The simultaneous movement of the two supporting members around the axes 39' and 39" results in a pitch movement of the vehicle on which the forecarriage 1 is mounted.

Rotation around the axes 35', 35" allows the wheels 13', 13" to steer, while rotation around the axes 39', 39" allows the wheels 13', 13" to perform an up-and-down movement, which can be independent for the two wheels, and which is dampened by the shock absorber assembly, described hereunder.

In other embodiments, the relative movement between supporting member and upright of the four-bar linkage can be given by a translation movement of the supporting member with respect to the upright.

The kinematic mechanism 15 comprises, besides the supporting members 31', 31" and the four-bar linkage 17, a first connecting bar 41, with two ends 42' and 42" connected to the first supporting member 31' and to the second supporting member 31", respectively. In the embodiment of Fig.1, the first connecting bar 41 acts as steering bar and transmits, in the manner described hereunder, to the wheel 13" the steering movement around the steering axis 35", controlled by the driver by means of the handlebar 7.

The connecting points between connecting bar 41 and supporting members 31', 31" are such that the connecting bar 41 is influenced by the up-and-down movements of the two wheels 13', 13".

Each end 42', 42" of the first connecting bar 41 is connected to the respective supporting member 31' 31" by means of a mechanism with two degrees of freedom indicated with 43' and 43". In practice, each mechanism 43', 43" can comprise a pair of hinges that allow a mutual rotation between supporting member 31', 31" and first connecting bar 41 around two axes that can be orthogonal to one another and in turn orthogonal to the longitudinal direction of the first connecting bar 41. The first axis 47', 47" can coincide with the axis of the beam that, in the diagram of Fig.1, represents the supporting member 31', 31", while the second axis can be orthogonal to the plane defined by the supporting member and by the first connecting bar 41, when the forecarriage 1 is in neutral position, i.e., with zero tilting angle.

In Fig.1, the axes of mutual rotation between first connecting bar 41 and supporting members 31', 31" are indicated with 47', 49' and 47", 49" on the two sides of the forecarriage 1, respectively. The movement around the axes 47', 47" and 49', 49" allows the first connecting bar 41 and the supporting members 31', 31" to move with respect to one another when the wheels 13', 13" perform steering rotations and tilting movements.

In an intermediate position of its longitudinal direction, the first connecting bar 41 is connected to the steering column 5 by means of the interposition of a suspension system which comprises a single central shock absorber assembly, marked as a whole with 51.

In the diagram of Fig.1, the shock absorber assembly 51 is connected to the first connecting bar 41 by means of a mechanism with two degrees of freedom, schematically indicated with 53. The mechanism 53 allows the first connecting bar 41 and the shock absorber assembly 51 to rotate mutually around a first axis of rotation parallel to the longitudinal direction of the first connecting bar 41, and around a second axis of rotation, indicated with 55, orthogonal to the longitudinal direction of the first connecting bar 41 and lying on the center-line plane M of the forecarriage 1. The degree of freedom around the axis 55 allows the first connecting bar 41 to follow up-and-down movements of the two wheels 13', 13" different from one another. The degree of freedom around the axis parallel to the first connecting bar 41 allows the shock absorber assembly 51 to rotate with respect to the first connecting bar 41 in dive movements (pitch movements), resulting from contraction of the shock absorber assembly 51, i.e., in the up-and-down movements of the wheels 13', 13" with respect to the uprights 23', 23".

In some embodiments, the first connecting bar 41 can comprise at least two portions positioned on the right and on the left of the central mechanism 53, hence on the two sides of the center-line plane M of the forecarriage frame, which are adapted to rotate with respect to one another around the axis of rotation parallel to the longitudinal direction of the first connecting bar 41.

At the opposite end with respect to the first connecting bar 41 the shock absorber assembly 51 is connected to the steering column 5 by means of a mechanism indicated as a whole with 57. The mechanism 57 allows the shock absorber assembly 51 and the steering column 5 to perform mutual rotation movements around a first axis of rotation 59 parallel to the longitudinal direction of the shock absorber assembly 51, and around a second axis of rotation 61, orthogonal to the first axis of rotation 59 and substantially horizontal when the forecarriage frame is in neutral position, i.e., with the axes of rotation of the wheels 13', 13" horizontal and zero tilting angle.

Moreover, the mechanism 57 comprises a rigid connection 63 with one end 5A of the steering column 5. In the diagram of Fig.1, the rigid connection is schematically represented by a bracket.

In the diagram of Fig.1 the first connecting bar 41 comprises two portions 41A and 41B, which are joined to one another by a joining element 44 adapted to allow a mutual movement of the two portions 41A, 41B with respect to the longitudinal axis of the first connecting bar 41, i.e., a lengthening and shortening movement of the first connecting bar 41. In this way the first connecting bar 41 is extensible and contractible.

Due to this variability of the length of the first connecting bar 41, in the case of different up-and-down movements for the two wheels 13', 13", the first connecting bar 41 can extend or contract so that the rotation of a supporting member 31', 31", around the axis 39', 39" thereof does not impart a differentiated steering movement to the wheel supported by the other of the two supporting members 31', 31".

However, due to the degree of freedom introduced by the joining element 44 the steering movement controlled by the handlebar 7 cannot be transmitted by the first connecting bar 41 to both the wheels 13', 13". In the configuration of Fig.1, the steering movement is transmitted by means of the central shock absorber assembly 51 and the portion 41B of the first connecting bar 41 to the wheel 13", but cannot be transmitted to the wheel 13', due to the joining element 44 interposed between the portions 41A, 41B of the first connecting bar 41. This joining element, which makes the first connecting bar 41 extensible, introduces a factor of instability that does not allow direct transmission of the steering movement from the shock absorber assembly 51 to the wheel 13'.

The forecarriage 1 of Fig.1 comprises a second connecting bar 71 substantially parallel to the first connecting bar 41. In the diagram of Fig.1 the first and the second connecting bar 41, 71 are positioned on opposite sides of the plane on which the four-bar linkage 17 lies, but this is not necessary and is mainly provided for a clearer conceptual representation of the kinematic mechanism as a whole. In other embodiments, the first connecting bar 41 and the second connecting bar 71 can be positioned on the same side of the plane on which the four-bar linkage 17 lies, for example both on the side of the driver or both on the opposite side.

The presence of two connecting bars 41, 71, one of which with variable length (the first connecting bar 41) and the other of fixed length and not influenced by the up-and-down or shaking movement of the wheels (second connecting bar 71) also allows advantages achievable with the configuration described in WO2017115274 to be obtained.

When the first connecting bar 41 and the second connecting bar 71 are on opposite sides of the plane on which the four-bar linkage 17 lies, the first can be on the side of the driver and the second on the opposite side, or vice versa.

The second connecting bar 71 is joined, by means of hinges 73' and 73" and brackets 75' and 75" to the sleeves 37' and 37". The hinges 73' and 73" allow mutual rotations, around axes parallel to the steering axes 35', 35", between the second connecting bar 71 and the brackets 75', 75". The brackets 75' and 75" are rigidly connected to the sleeves 37', 37" and move integrally therewith.

With this arrangement the second connecting bar 71 is in practice connected to the two sleeves 37' and 37", and hence to the supporting members 31', 31", at points which are neutral with respect to the up-and-down movement of the front wheels 13' 13", i.e., in points that do not participate in the up-and-down movement of the wheels. Consequently, in the case in which the two wheels 13' and 13" perform two up-and-down movements different from one another, the second connecting bar 71 does not introduce an unwanted steering movement of one or of the other wheel around the respective steering axis, despite the fact that its length is fixed.

The forecarriage 1 described above functions as follows. The steering movement of the wheels 13', 13" around the respective steering axes 35', 35" is obtained by turning the handlebar 7 around the axis A-A of the steering column 5. This movement is transmitted by means of the mechanism 57 to the shock absorber assembly 51 and from this, by means of the mechanism 53, to the first connecting bar 41. This latter transmits the motion imparted by the handlebar 7 to the supporting member 31", which consequently rotates around the steering axis 35". The second connecting bar 71 transmits the steering motion from the second sleeve 37" to the first sleeve 37' and therefore ensures that the first wheel 13' rotates around the first steering axis 35' synchronously with the second wheel 13".

In substance, the steering movement is transmitted to the two wheels 13', 13" by means of the combined action of the first connecting bar 41 and of the second connecting bar 71, which both act as steering bars, in combination with one another.

The four-bar linkage 17 of the kinematic mechanism 15 allows the tilting movement, for example when the motor vehicle to which the forecarriage 1 belongs, travels a curve, allowing the motor vehicle to tilt. When the motor vehicle tilts, the hinges 25', 25", 27', 27" of the four-bar linkage 17 allow deformation of this four-bar linkage, and the cross members 19, 21 rotate around the axes 19B, 21B defined by the hinges 19A, 21A. The wheels 13', 13" tilt, deviating from the vertical plane, following the tilting movement of the motor vehicle.

The single central shock absorber assembly 51 allows absorption and damping of the up-and-down movements of the wheels 13', 13", which entail rotation movements of the supporting members 31', 31" around the axes 39', 39". The up-and-down movements can be synchronous and equal in size for the two supporting members 31', 31" and respective wheels 13', 13", or different for the two supporting members 31', 31" and respective wheels 13', 13". An unequal movement for the two wheels can occur, for example, in a transitory phase, such as the phase after the vehicle has encountered an obstacle.

In other embodiments, not shown, the first connecting bar 41 can be divided into three portions, by means of two joining elements 44 positioned one between the wheel 13' and the connection point of the shock absorber assembly 51 to the first connecting bar 41, and the other between the connection point of the shock absorber 51 to the first connecting bar 41 and the wheel 13". A further transmission element of the movement of the steering column 5 connects the steering column 5 to the second connecting bar 71. In this case the second connecting bar 71 acts as sole steering bar, which is not influenced by the up-and-down movement of the wheels 13', 13". The first connecting bar 41 connects the supporting members 31', 31" of the wheels 13', 13" to the central shock absorber assembly 51 and by means of the shock absorber assembly 51 allows damping of the up-and-down movements of the two wheels 13', 13".

Therefore, in this case the second connecting bar 71 acts as steering bar, while the first connecting bar 41 acts as transmission component of the up-and-down motion of the wheels 13', 13" to the shock absorber assembly 51.

The forecarriage 1 described above can be provided with a device of known type for blocking the tilting movement. This device is particularly useful for blocking the tilting movement (in substance the movement of the four-bar linkage) when the motor vehicle on which the forecarriage 1 is mounted is at a standstill, for example at traffic lights, or is traveling at low speed. By blocking the tilting movement, the motor vehicle remains stably in vertical position, without the driver requiring to support it by placing a foot on the ground, even when stopped. In practice, when the vehicle is stopped, or optionally travelling very slowly, with the device for blocking the tilting movement inserted it cannot perform tilting movements, while dive, i.e., pitch, movements, which involve a compression and extension of the shock absorber assembly, are instead still possible. At higher speeds, when the device for blocking the tilting movement is deactivated, the motor vehicle behaves like a two-wheeled vehicle.

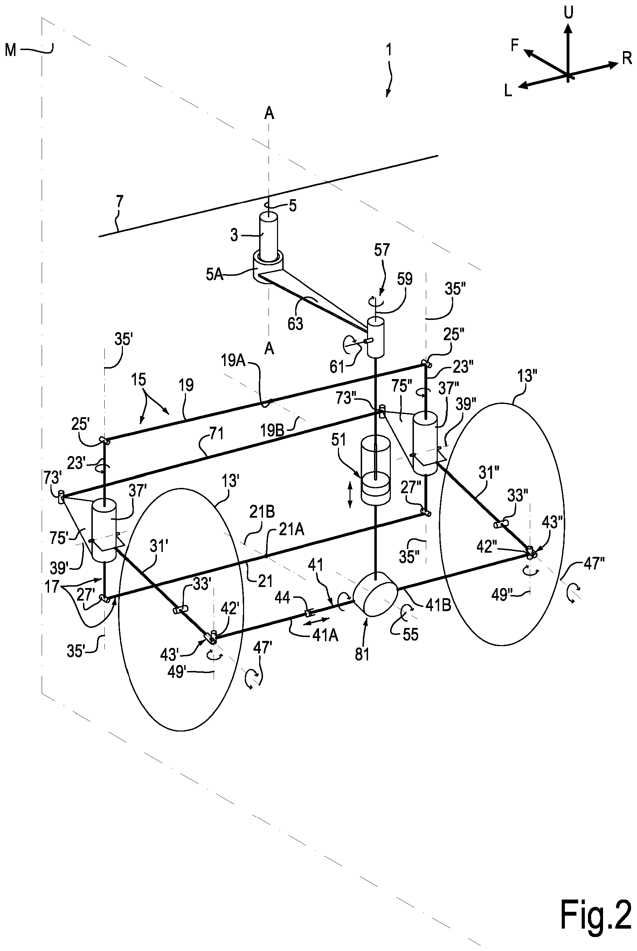

In particularly advantageous embodiments, the forecarriage described herein can have a device for blocking the tilting movement that blocks movement of the four-bar linkage 17, but does not block operation of the shock absorber assembly 51. Fig. 2 shows an embodiment of the forecarriage 1 similar to that of Fig.1, in which a device for blocking the tilting movement is provided, indicated with 81. The same or equivalent elements, parts or components as those of Fig.1 are indicated with the same reference numbers and shall not be described again.

The device for blocking the tilting movement 81 can be designed as disclosed in WO2017/115296, the content of which is fully incorporated in the present description. In practice, the device for blocking the tilting movement 81 comprises a mutual blocking member of the first connecting bar 41 and of the shock absorber assembly 51, which prevents - when activated - a relative rotation movement around the axis 55 between the shock absorber assembly 51 and the first connecting bar 41. This makes mutual rotation of the elements that form the four-bar linkage 17 impossible and hence prevents the tilting movement.

However, as is apparent from the diagram of Fig.2, when the device for blocking the tilting movement is activated, it is still able to perform a dive, i.e., pitch, movement of the vehicle. This makes driving the motor vehicle easier even at low speeds, when the tilting movement is blocked. In particular, the shock absorber assembly 51 allows dive movements (compression of the shock absorber assembly 51) even when the motor vehicle is at a standstill or almost at a standstill.

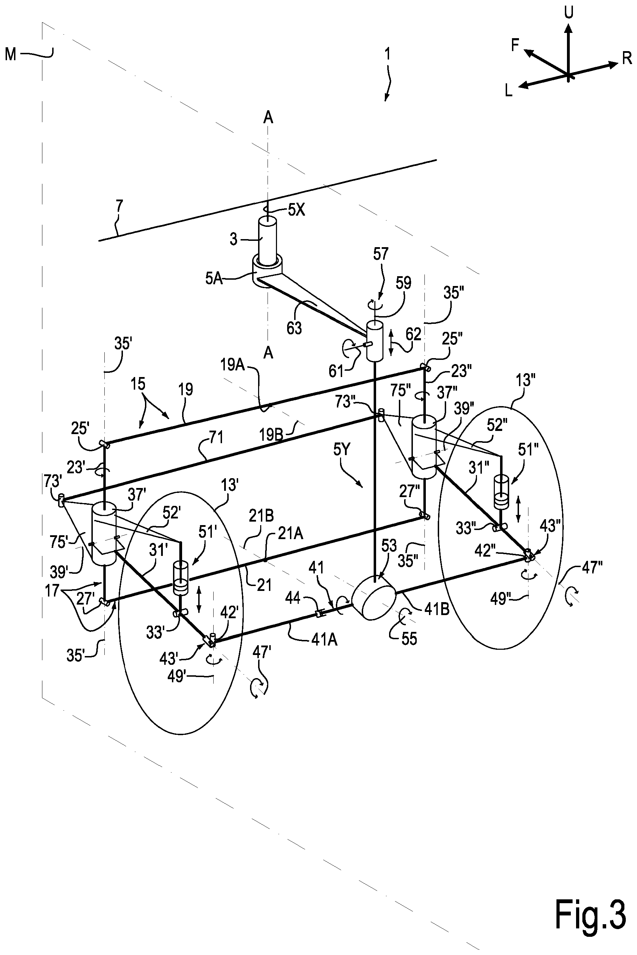

Fig.3 illustrates a further embodiment of a forecarriage, which differs from the previous embodiments mainly due to the presence of two separate shock absorber assemblies for the two front wheels. The same reference numbers indicate parts, elements or components that are the same as or equivalent to those of Figs. 1 and 2 and which shall not be described again in detail. The main differences with respect to the embodiments of the Figs. 1 and 2 shall instead be described hereunder. In Fig.3 the forecarriage 1 comprises a device for blocking the tilting movement 81 as in Fig. 2. This configuration is particularly advantageous, as it allows tilting to be blocked in a simple manner and with a mechanism with which it is still possible to maintain a dive movement, i.e. a pitch movement of the vehicle, with up-and-down movement, equal for the two front wheels 13', 13", around the axes 39', 39".

In Fig.3 the suspension system of the front wheels 13', 13" does not comprise a single central shock absorber assembly 51, but rather two shock absorber assemblies 51', 51". Therefore, the first connecting bar 41 is not connected to the handlebar 7 with the interposition of a viscoelastic system (central shock absorber assembly 51). In Fig.3 the first connecting bar 41 is joined, in an intermediate point, to the steering column 5 by means of a system with two degrees of freedom, which allows rotation movements around the axis 55 and an axis parallel to the longitudinal direction of the first connecting bar 41. In Fig.3 the device for blocking the tilting movement 81 is associated with the mechanism with two degrees of freedom that joins the steering column 5 to the first connecting bar 41.

In this embodiment the steering column comprises a first portion 5X rotatingly housed in the steering column tube 3, and a second portion 5Y. The two portions 5X, 5Y are joined to one another by a rigid connection 63 and by a mechanism 57 that allows the portion 5Y of the steering column 5 three degrees of freedom with respect to the connection 63, and more precisely: a rotation around an axis 59 forming the axis of the portion 5Y of the steering column 5; a rotation around an axis 61 orthogonal to the axis 59 and parallel to the cross member 19, 21 of the four-bar linkage 17, when the vehicle is in neutral position (zero tilting angle); and a translation movement according to the arrow 62, which allows the first connecting bar 41 to move toward and away from the rigid connection 63.

In the embodiment of Fig.3 each shock absorber assembly 51' and 51" comprises a viscoelastic system (spring and damper) connected between the respective supporting member 31', 31" and an integral bracket 52', 52", i.e. connected rigidly to the respective sleeve 37', 37". In this way each wheel 13', 13" can pivot with an up-and-down motion (pitch), around the corresponding axis 39', 39", with respect to its sleeve 37', 37" with a movement that is dampened by the respective shock absorber assembly 51', 51".

The remaining parts of the forecarriage 1 of Fig.3 are substantially the same as those already described with reference to Figs. 1 and 2, to achieve the same operating mode. In particular, the steering movement controlled by means of the handlebar 7 is transmitted by means of the steering column 5 (5X, 5Y, 57, 63) to the first connecting bar 41 and from this to the wheel 13". The steering movement of the wheel 13" is then transmitted to the supporting member 31' and hence to the wheel 13' by means of the second connecting bar 71. The joining element 44 between the two portions 41A, 41B of the connecting bar 41 allows limited extension and contraction movements of the first connecting bar 41 in the presence of unequal up-and-down movements for the two wheels 13' 13", so as to prevent an unwanted steering movement of one wheel caused by the difference of the two up-and-down movements around the axes 39', 39" of the two wheels 13', 13".

In the diagram of Fig.3, as in the diagram of Fig.2, when the vehicle on which the forecarriage 1 is mounted is at a standstill or almost at a standstill, the device for blocking the tilting movement 81 can be activated, making the connection between steering column (and more precisely between the portion 5Y of the steering column) and the first connecting bar 41 around the axis 55 rigid. This ensures that a pitch movement of the vehicle, with substantially equal compression of the two shock absorber assemblies 51', 51", is still possible, but that the tilting movement is blocked, and hence lateral leaning of the vehicle is prevented. This allows the driver to remain in balance even with the vehicle at a standstill or at low speed, without requiring to place a foot on the ground.

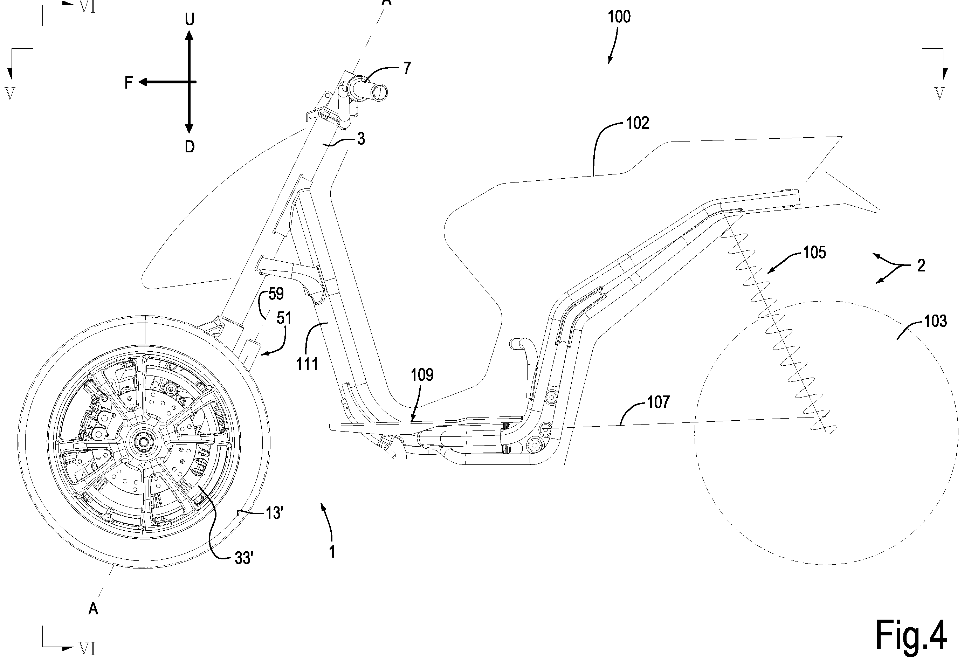

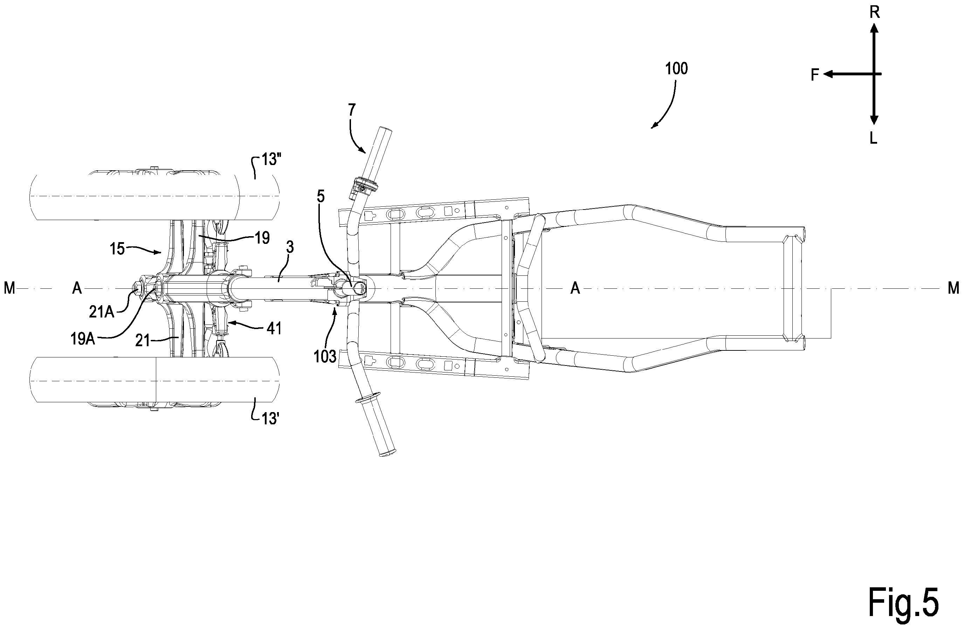

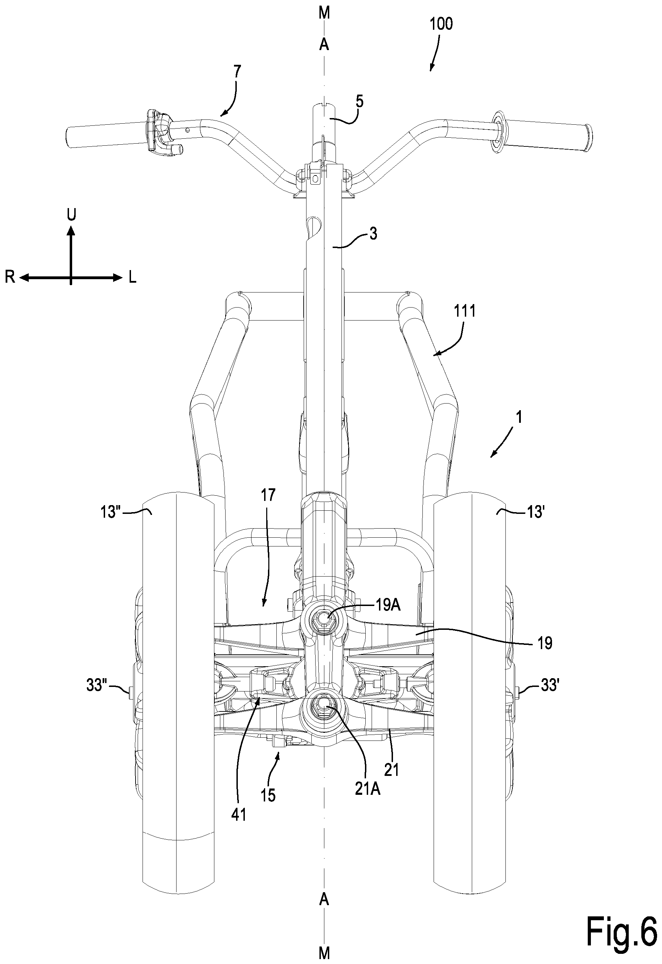

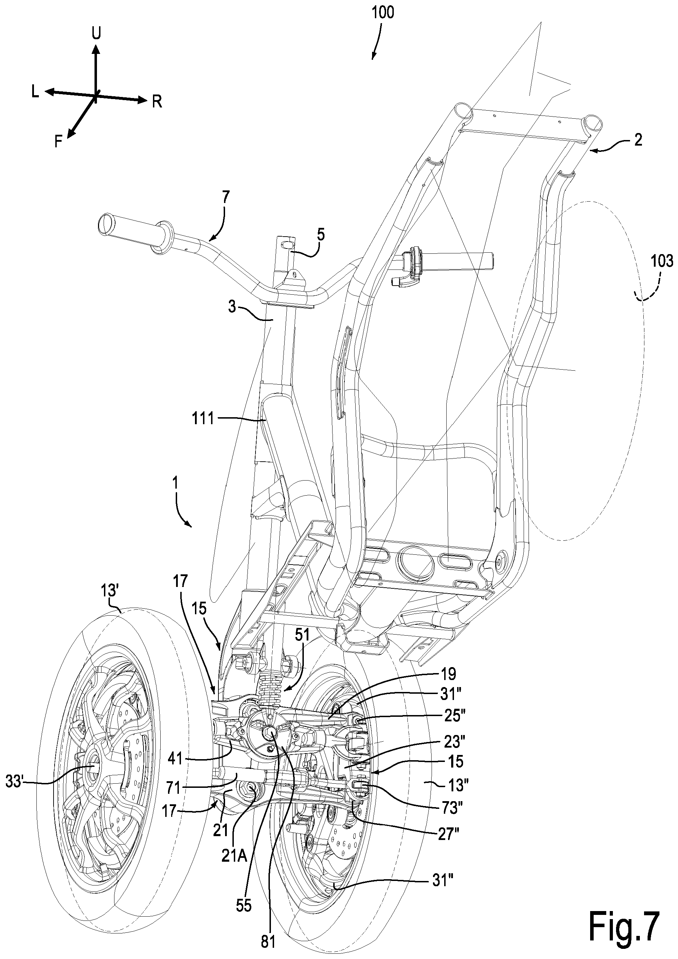

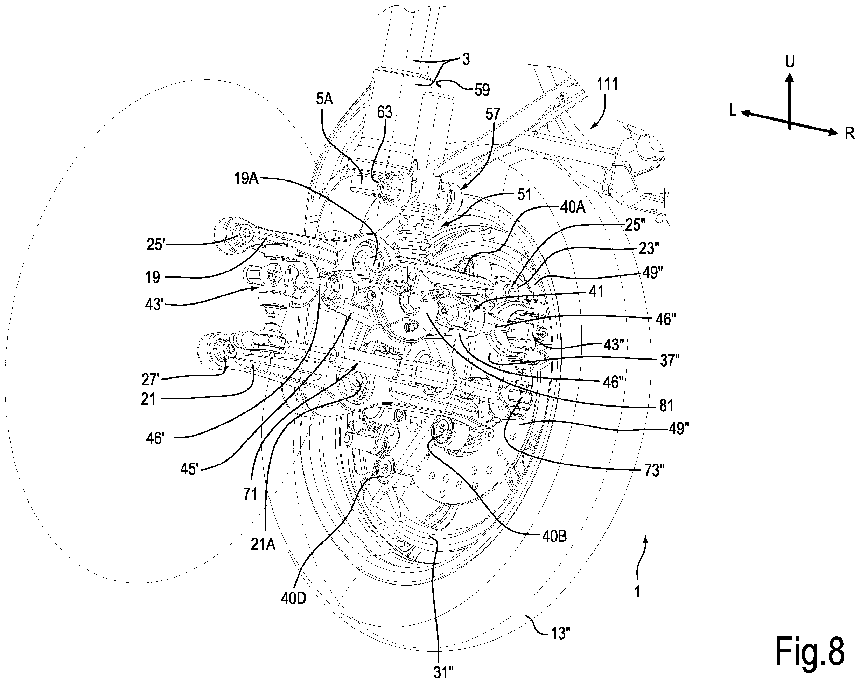

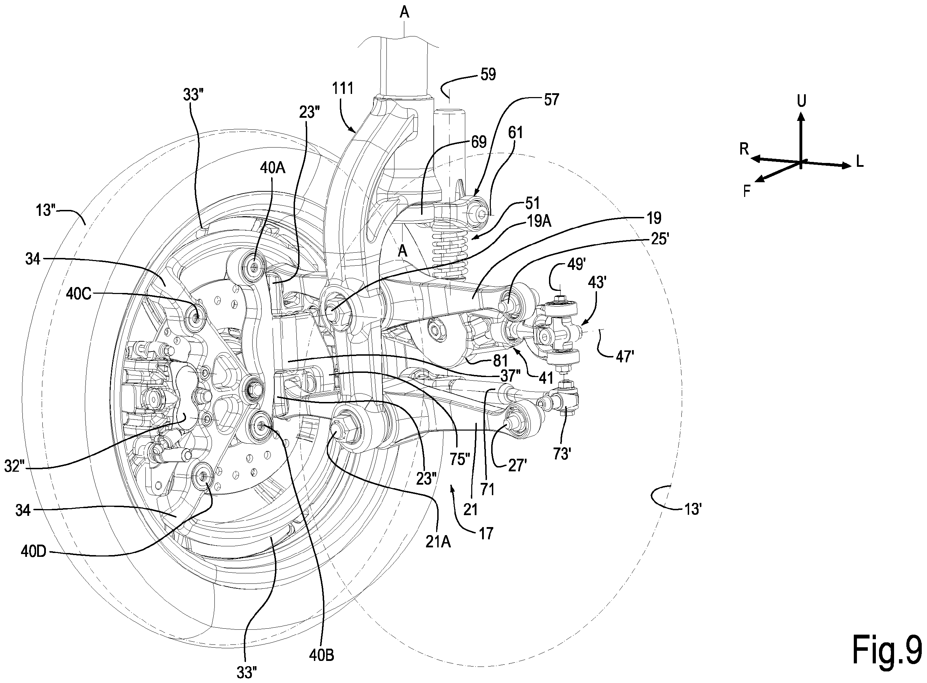

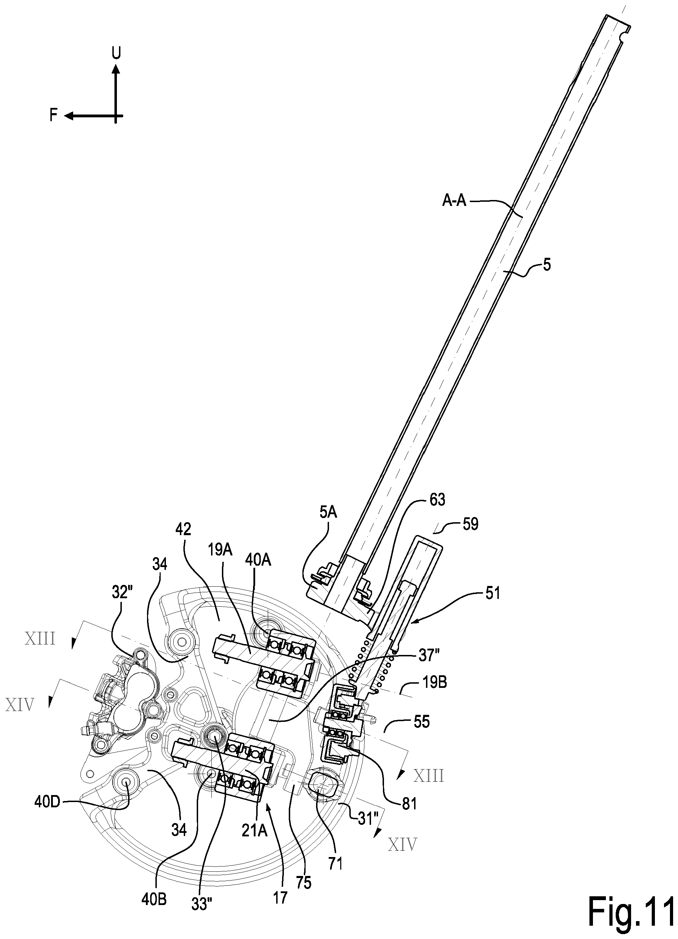

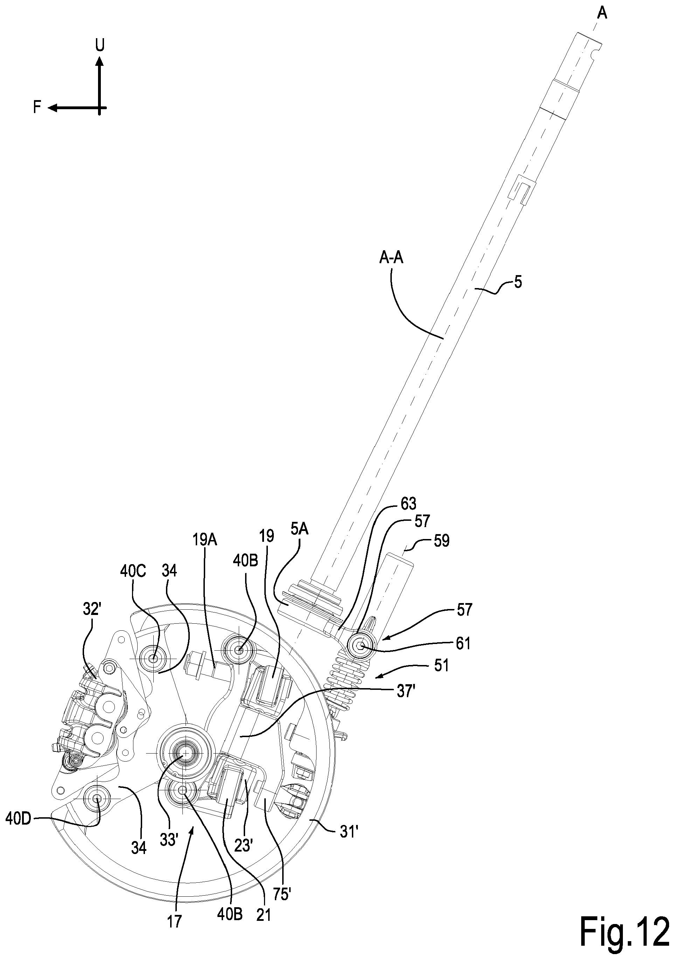

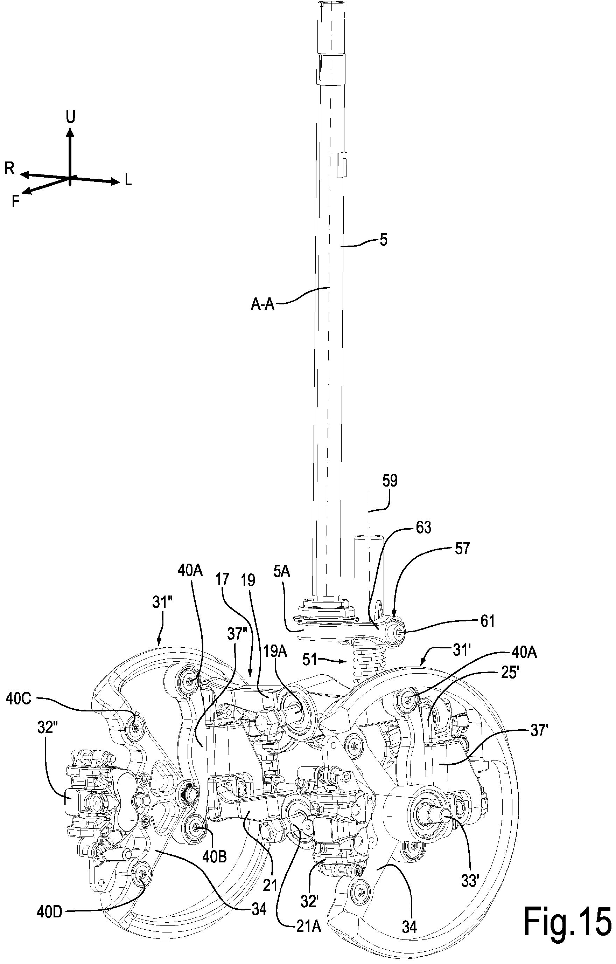

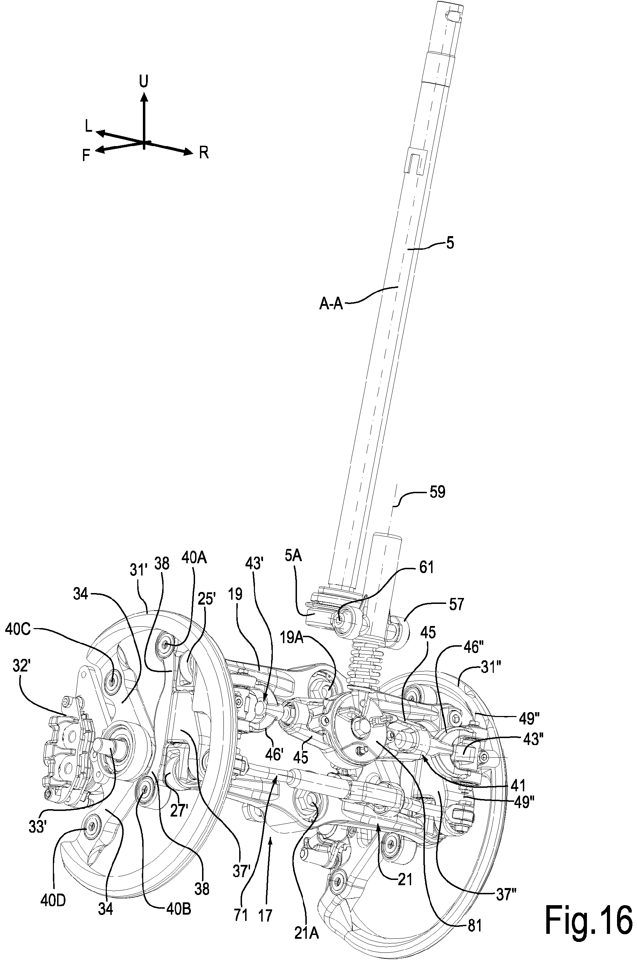

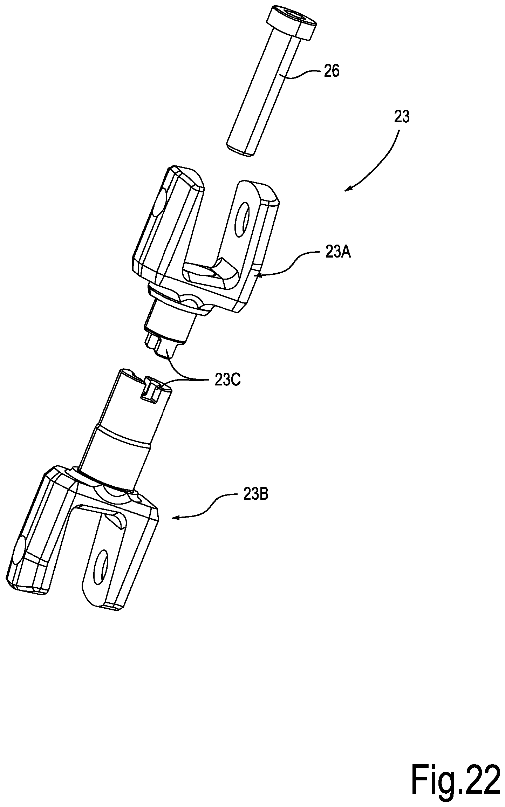

### Embodiment of Figs. 4 to 22

Figs. 4 to 22 show a practical embodiment of a three-wheeled motorcycle in the form of scooter, which comprises a steering device designed according to the kinematic configuration illustrated in the diagram of Fig. 1 and more specifically in the diagram of Fig.2. The same numbers indicate components corresponding to parts or elements already illustrated in Figs. 1 and 2.

Figs. 4 to 6 illustrate the motorcycle as a whole, indicated with 100. Body parts have been omitted to show the kinematic mechanisms concerned by the present description. Reference number 102 schematically indicates a saddle of the motorcycle 100. Reference number 1 once again indicates the forecarriage, and reference number 2 indicates the rear section of the motorcycle 100. The rear section is shown schematically, and can take any suitable form. It supports a rear driving wheel 103, operated by an engine, not shown. The driving wheel 103 can be associated with a suspension, generically and schematically indicated with 105, and can be supported by a fork, schematically indicated with 107, hinged to the frame, indicated as a whole with 109, of the motorcycle 100. The frame 109 comprises a forecarriage frame 111, to which the kinematic steering mechanism 15 that embodies the kinematic diagram of Fig.4 is connected in the manner described below. More in particular, the forecarriage frame 111 comprises a steering column tube 3, in which a steering column 5, integral with a handlebar or steering wheel 7, rotates. The steering column 5 is rotatable around an axis of A-A upon control of the driver by means of the handlebar 7.

A first front steered wheel 13' and a second front steered wheel 13" are associated with the forecarriage 1. As in the previous description of the kinematic diagrams of Figs. 1 and 2, hereinafter components, assemblies or elements symmetrical with respect to a center-line plane M of the forecarriage 1 are indicated with the same reference number followed by one apostrophe ' for elements on one side of the center-line plane M, for example the left side of the driver, and with two apostrophes " for elements on the other side of the center-line plane M, for example the right side of the driver.

The number 15 indicates as a whole the kinematic steering mechanism that allows the front steered wheels 13' and 13" to perform synchronous steering and tilting movements.

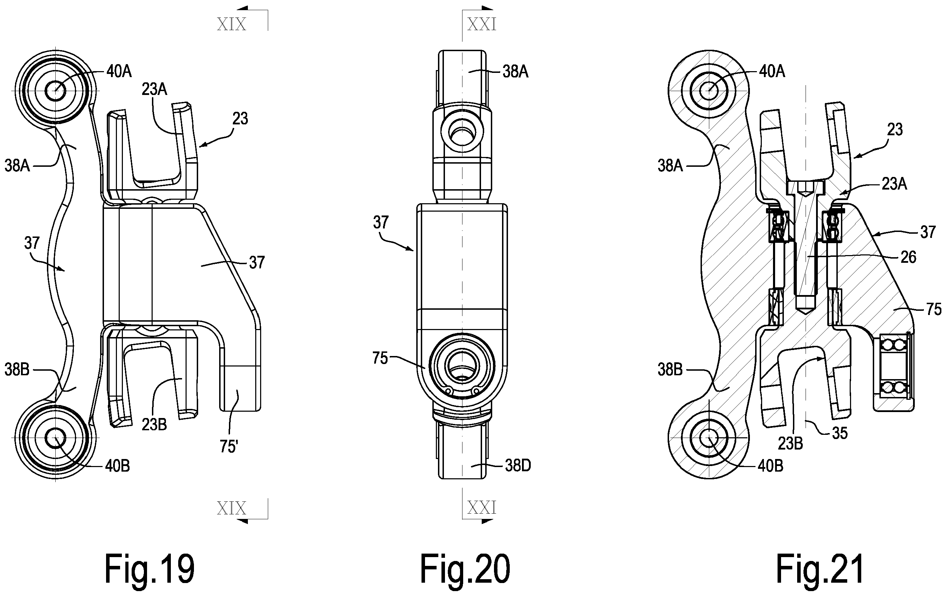

The kinematic steering mechanism 15 comprises a four-bar linkage 17 which has a first upper cross member 19 and a second lower cross member 21, substantially parallel to one another. The two cross members 19, 21 are hinged to the forecarriage frame 111 in 19A and 21A by means of respective mid-position hinges. Moreover, the four-bar linkage 17 comprises two uprights 23' and 23" on the two sides of the forecarriage 1. The uprights are visible in particular in the views of Figs. 19 to 22. The reference numbers 25', 27' and 25", 27" indicate hinges on the two sides of the forecarriage 1, with which the uprights 23' and 23" are hinged to the cross members 19, 21. The hinges 25', 25" and 27', 27" define mutual axes of rotation of the cross members 19, 21 and of the uprights 23', 23", which are parallel to the axes 19B and 21B of rotation of the cross members 19, 21 with respect to the forecarriage frame 111.

In the illustrated embodiment, the four-bar linkage 17 is arranged approximately at the height of the two wheels 13', 13", i.e., is arranged between the front steered wheels of the vehicle.

The kinematic steering mechanism 15 comprises, besides the four-bar linkage 17, a pair of supporting members 31' 31" that rotatingly support the wheels 13' and 13", respectively. Each supporting member 31', 31" supports the rotation pin 33', 33" of the respective wheel 13', 13" and other mechanical components, for example the brakes 32', 32". In the embodiment of Figs. 4 to 22 the supporting members 31', 31" are made in the form of partial annular bodies, i.e., which extend for less than 360°, and which have two spokes 34 that join the journals 33', 33" of the wheels to the respective partial annular bodies.

Each supporting member 31', 31" of the wheels 13', 13" is connected to the respective upright 23', 23" of the four-bar linkage 17 so as to be able to rotate around the respective steering axis 35', 35". Each steering axis 35', 35" coincides with a longitudinal axis of the respective upright 23', 23" (see also Fig.21), i.e., with an axis extending parallel to the prevalent longitudinal direction of the upright 23', 23". The mutual rotation between upright 23', 23" and supporting member 31', 31" can be obtained, for example, by means of a sleeve 37', 37" mounted around the upright 23', 23" and to which the respective supporting member 31', 31" is in turn connected, with the possibility of relative movement between supporting member 31', 31" and sleeve 37', 37", to allow the up-and-down movement of the wheels.

An embodiment of the upright 23', 23" and of the sleeve 37' 37" is shown in detail in Figs. 19 to 22. In these figures upright and sleeve are indicated with 23, 37. Each upright 23 comprises two portions 23A, 23B couplable to one another by means of a screw 26. Each portion 23A, 23B comprises a fork body that forms part of the respective hinge 25 and 27 respectively. The two portions 23A, 23B are joined at toothed profiles 23C that define a relative angular position between the two parts 23A, 23B.

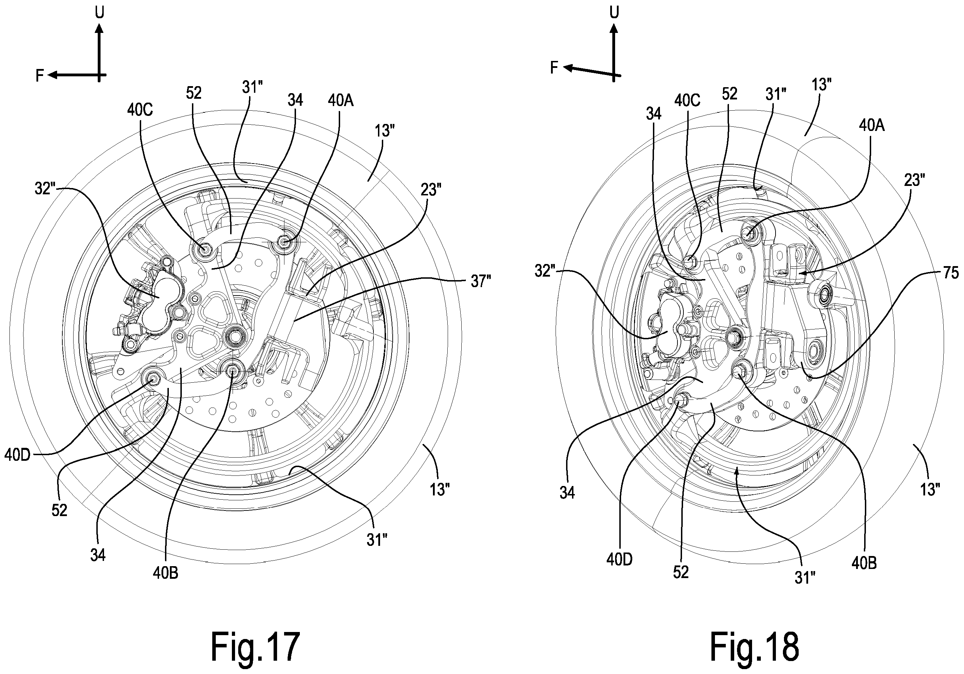

As shown in Figs. 19 to 22, each sleeve 37', 37" has expansions 38A, 38B that form hinges 40A, 40B for the articulation of two rocker arms 52, visible in particular in Figs.17 and 18, and omitted for clarity of representation in the other figures. The rocker arms 52 are hinged in 40A and 40B to the expansions 38A, 38B and in 40C and 40D to the respective supporting member 31', 31". In practice, each supporting member 31', 31" forms, together with the respective sleeve 37', 37" and with the rocker arms 52, a four-bar linkage, the function of which is the same as that of the hinge that embodies the axis 39', 39" in the kinematic diagram of Fig.3. In practice, by means of the rocker arms 52 of each supporting member 31', 31" of the wheel 13' and 13" respectively, the up-and-down movement of said wheel is allowed. While in the simplified kinematic diagram of Figs. 1 and 2 the up-and-down movement of the supporting members 31', 31" is represented as a rotation movement around the axes 39', 39", in the embodiment of Figs. 4 to 22 the movement of the supporting members 31', 31" is a roto-translation movement obtained by rotation of the rocker arms 52 around the respective hinges 40A, 40B for connecting to the sleeve 37. The axes of the hinges 40A, 40B can form springing axes.

When the rocker arms 40 pivot around the hinges 40A, 40B the supporting members 31', 31" move in a plane that, when the vehicle 100 is in neutral position (i.e., vertical without leaning caused by tilting), it is in vertical position. The simultaneous roto-translation movement of the two supporting members 31', 31" around the hinges 40A, 40B results in a pitch movement of the vehicle 100. The roto-translation movement of the supporting members 31', 31" corresponds to the up-and-down motion of the wheels, which can be different for the left wheel and the right wheel.

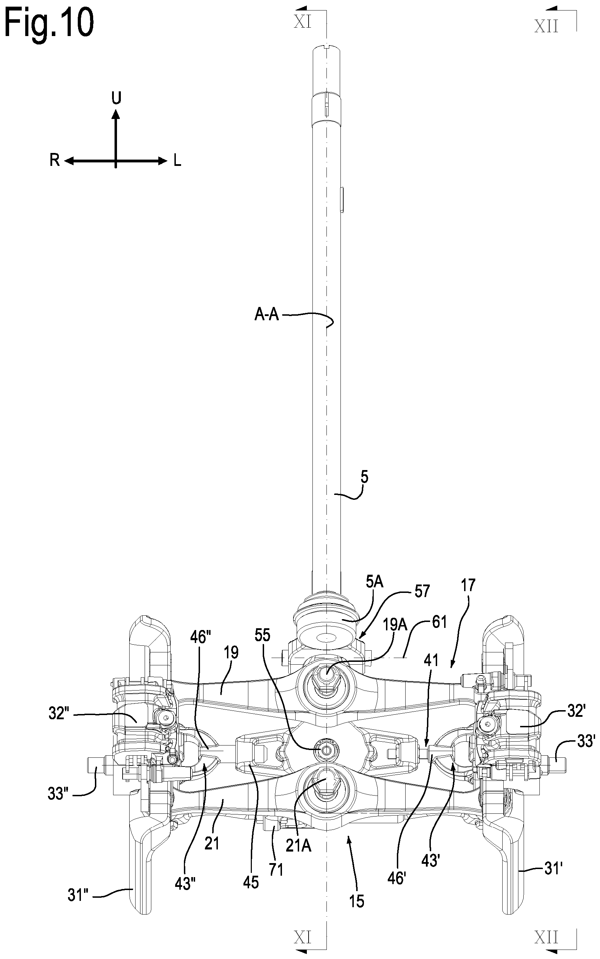

The kinematic steering mechanism 15 comprises, besides the supporting members 31', 31" of the wheels 13', 13" and the four-bar linkage 17, a first connecting bar 41, with two ends connected to the first supporting member 31' and to the second supporting member 31", respectively. In the embodiment of the Figs. 4 to 21, as in the diagram of Figs.1 and 2, the first connecting bar 41 acts as steering bar and transmits the steering movement around the steering axis 35' to the wheel 13'. Each end (labeled 42', 42" in the diagram of Figs. 1 and 2 and not marked in the subsequent figures) of the first connecting bar 41 is connected to the respective supporting member 31' 31" by means of a respective mechanism with two degrees of freedom indicated with 43' and 43". These two degrees of freedom allow a mutual rotation between supporting member 31', 31" and first connecting bar 41 around two axes orthogonal to one another and orthogonal to the longitudinal direction of the first connecting bar 41. The first axis is indicated with 47', 47" in particular in Figs. 10, 11 and 15, while the second axis is indicated with 49'and 49".

The movement around the axes 47', 47" and 49', 49" allows the first connecting bar 41 and the supporting members 31', 31" of the wheels 13', 13" to move with respect to one another when the wheels 13', 13" perform steering rotations and tilting movements.

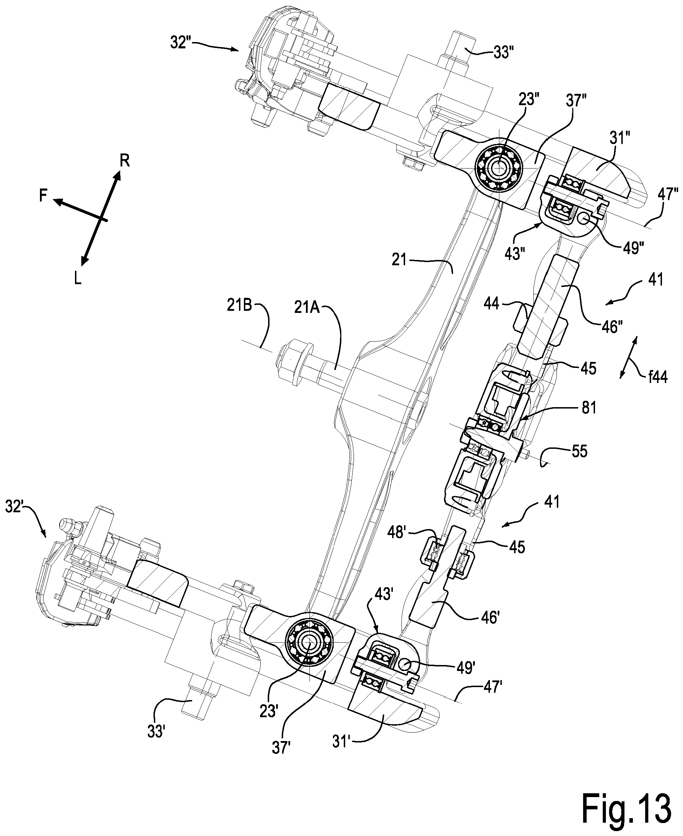

As can be seen in particular in the section of Fig.13, in the embodiment of Figs. 4 to 22 the first connecting bar 41 comprises three portions connected to one another. More precisely, the first connecting bar 41 comprises a central or intermediate part 45 and two end parts 46', 46". The end part 46' is connected to the central part 45 by means of a bearing 48', which allows mutual rotation between the intermediate or central part 45 and the end part 46', but does not allow mutual sliding. Vice versa, the connection between the central or intermediate part 45 and the end part 46" is obtained through a joining element 44 which allows a variation in length according to the arrow f44 (Fig.13) of the first connecting bar 41. The joining element 44 can be formed by a sliding bearing that allows an axial movement between its two components. The function of this possible variation of the length of the first connecting bar 41 is as described above in relation to Figs. 1 and 2. In substance, due to this possible elongation and contraction, which can be limited to a few millimeters or centimeters, the kinematic mechanism obtained is no longer affected by the constraint of constancy of the distance between the connection points of the supporting members 31', 31" to the first connecting bar 41. In the case of different up-and-down movements for the two wheels 13', 13", the first connecting bar 41 can extend or contract according to the arrow f44 so that the roto-translation movement of a supporting member 31', 31" with respect to its sleeve 37 guaranteed by the rocker arms 40, does not transmit an unwanted steering movement to the wheel 13', 13" supported by the other of the two supporting members 31', 31".

In an intermediate position of its longitudinal direction, the first connecting bar 41 is connected to the steering column 5 by means of the interposition of a shock absorber assembly, marked as a whole with 51. In the embodiment of Figs. 4 to 22, the connection between steering column and first connecting bar is formed by the central or intermediate part 45.

The shock absorber assembly 51 is connected to the first connecting bar 41 by means of a mechanism with two degrees of freedom, which allows the first connecting bar 41, or more precisely the ends thereof, and the shock absorber assembly 51 to rotate mutually around a first axis of rotation parallel to the longitudinal direction of the first connecting bar 41, and around a second axis of rotation, indicated with 55, orthogonal to the longitudinal direction of the first connecting bar 41 and lying on the center-line plane M of the forecarriage 1. The first of the two degrees of freedom is in practice provided by means of the bearing 48. The degree of freedom around the axis 55 allows the first connecting bar 41 to follow up-and-down movements of the two wheels 13', 13" different from one another. The degree of freedom around the axis parallel to the first connecting bar 41 allows the shock absorber assembly 51 to rotate with respect to the first connecting bar 41, or more precisely with respect to the parts 46', 46" thereof, in the dive movements, resulting from contraction of the shock absorber assembly 51, i.e., in the up-and-down movements of the wheels 13', 13" with respect to the uprights 23', 23".

At the opposite end with respect to the first connecting bar 41 the shock absorber assembly 51 is connected to the steering column 5 by means of a mechanism indicated as a whole with 57. The mechanism 57 allows the shock absorber assembly 51 and the steering column 5 to perform mutual rotation movements around a first axis of rotation 59 parallel to the longitudinal direction of the shock absorber assembly 51, and around a second axis of rotation 61, orthogonal to the first axis of rotation 59 and substantially horizontal when the forecarriage frame is in neutral position, i.e., with the axes of rotation of the wheels 13', 13" horizontal and zero tilting angle.

Moreover, the mechanism 57 comprises a rigid connection 63 with one end 5A of the steering column 5.

Reference number 81 indicates a device for blocking the tilting movement, known and not described. As indicated with reference to the embodiment of Fig.2, in practice the device 81 comprises a mutual blocking member of the first connecting bar 41 and of the shock absorber assembly 51; this blocking member prevents - when activated - a movement of relative rotation around the axis 55 between the shock absorber assembly 51 and the first connecting bar 41. This makes mutual rotation of the elements forming the four-bar linkage 17 impossible and hence prevents the tilting movement of the vehicle 100. However, when the device for blocking the tilting movement 81 is activated, the shock absorber assembly 51 is still able to perform a pitch movement, i.e., a dive movement.

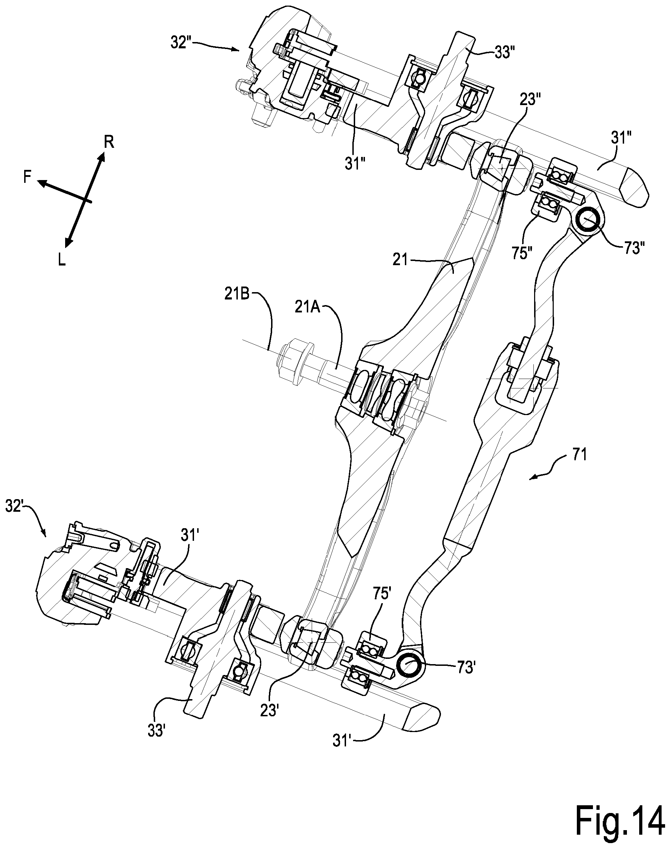

Similarly to what was illustrated with reference to the simplified diagrams of Figs. 1 and 2, and as mentioned above, in the embodiment of Figs. 4 to 22 the first connecting bar 41 has a variable length. Therefore, in the configuration of Figs. 4 to 22, the steering movement is transmitted by means of the central shock absorber assembly 51 and the part 46' of the first connecting bar 41 to the wheel 13', but cannot be transmitted to the wheel 13", due to the joining element 44 interposed between the central part 45 and the end part 46" of the first connecting bar 41. To transmit the steering movement to both wheels, the kinematic steering mechanism comprises, also in the embodiment of Figs. 4 to 22, a second connecting bar 71, which transmits the steering movement from one to the other of the two supporting members 31', 31" of the wheels 13', 13". In the embodiment illustrated in Figs. 4 to 22 (see in particular Fig.14), the second connecting bar 71 is formed by two parts or portions, which can rotate with respect to one another around an axis parallel to the longitudinal direction of the connecting bar 71, but without variations in length being possible.

In the embodiment of Figs. 4 to 22, the first and the second connecting bar 41, 71 are positioned on the same side with respect to the plane on which the four-bar linkage 17 lies, contrary to what is shown schematically in Figs. 1 and 2.

The second connecting bar 71 is joined, by means of hinges 73' and 73" and brackets 75' and 75" to the sleeves 37' and 37".

The hinges 73' and 73" allow mutual rotations, around axes parallel to the steering axes 35', 35", between the second connecting bar 71 and the brackets 75', 75". The brackets 75' and 75" are rigidly connected to the sleeves 37', 37" and move integrally therewith.

With the arrangement illustrated in Figs. 4 to 22, as already described in relation to Figs. 1 and 2, the steering movement is transmitted from the handlebar 7 to the wheel 13' by means of the second connecting bar 71 as follows. By rotating, the steering column 5 causes the shock absorber assembly 51 to move along an arc of a circumference centered on the axis A-A of the steering column 5. This movement is transmitted by means of the shock absorber assembly 51 and the portion 46' of the first connecting bar 41 to the wheel 13' and to its supporting member 31". This causes rotation of the sleeve 37' around the steering axis 35'. Rotation of the supporting member 31' is transmitted, by means of the bracket 75', the second connecting bar 71 and the bracket 75", to the sleeve 37". Consequently, this latter rotates around the steering axis 35" thereof, causing rotation of the supporting member 31" and of the wheel 13" around the aforesaid steering axis 35".

Advantageously, the second connecting bar 71 can be provided with means for adjusting toe-in of the pair of front steered wheels, of known type. Additionally, also the first connecting bar can comprise adjusting means only on the side of the controlled wheel to ensure that the distance between the hinges that allow tilting is correct, i.e., is equal to the distance between the corresponding tilting hinges measured on the horizontal elements (rocker arms) of the four-bar.

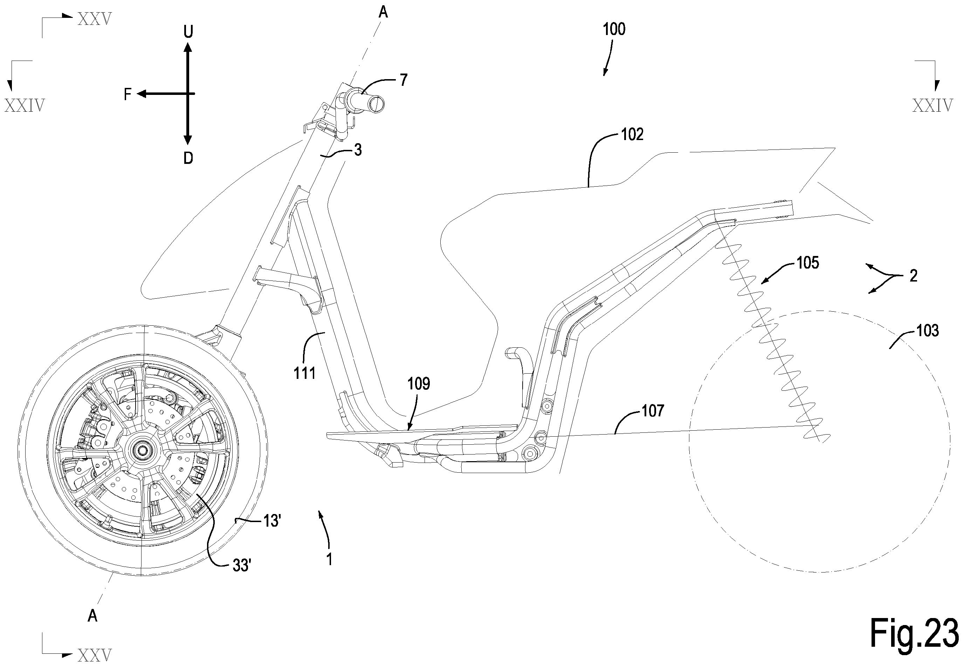

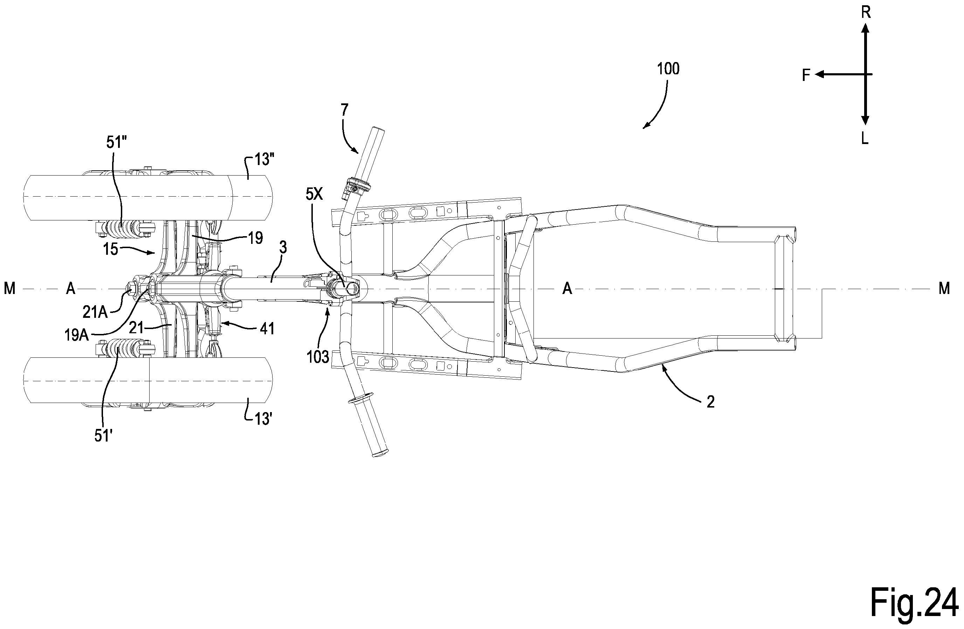

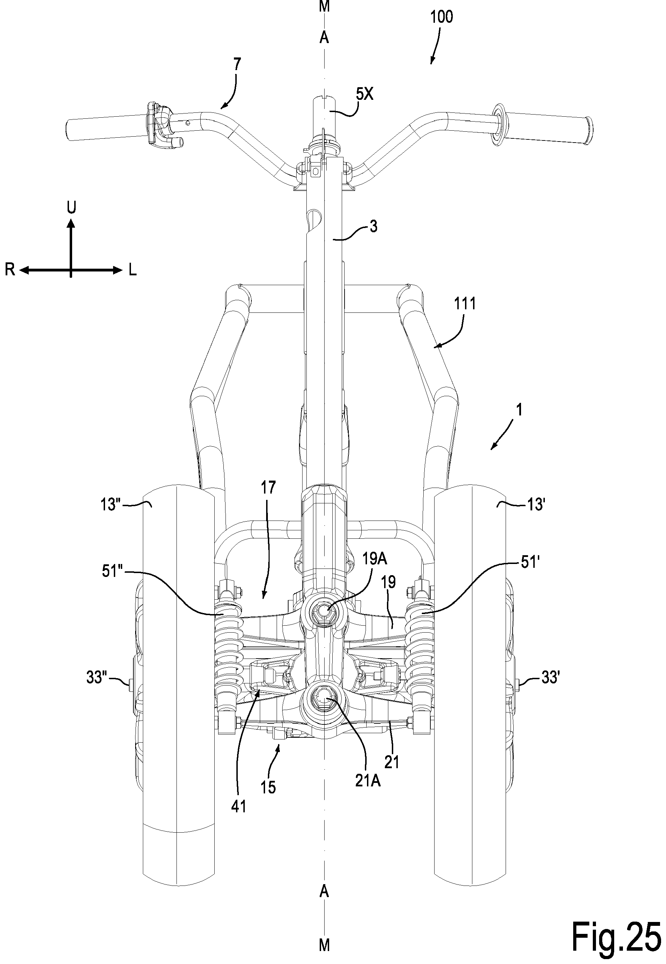

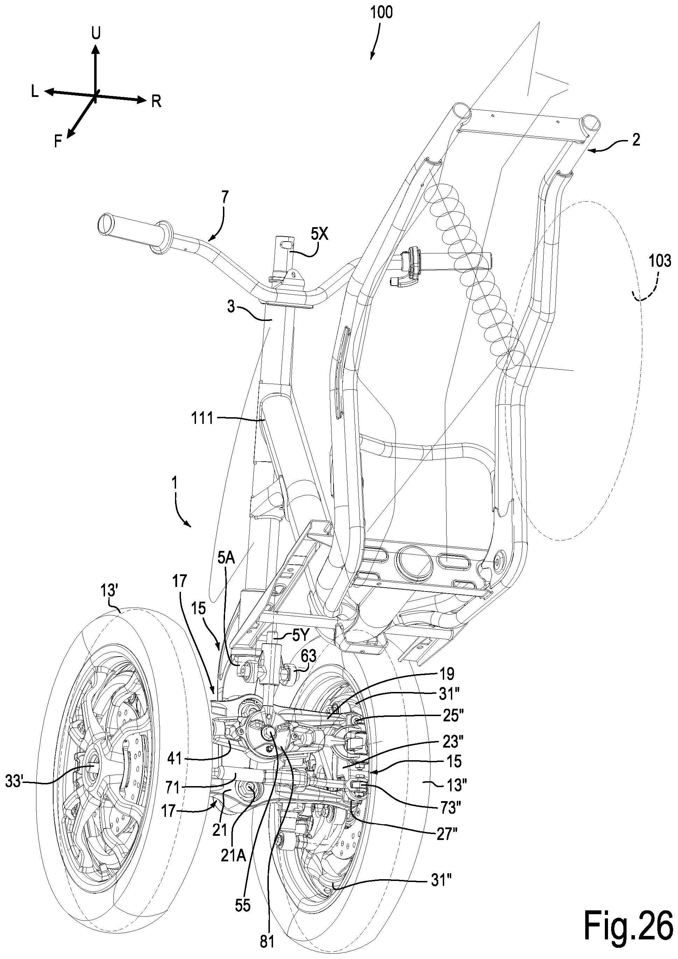

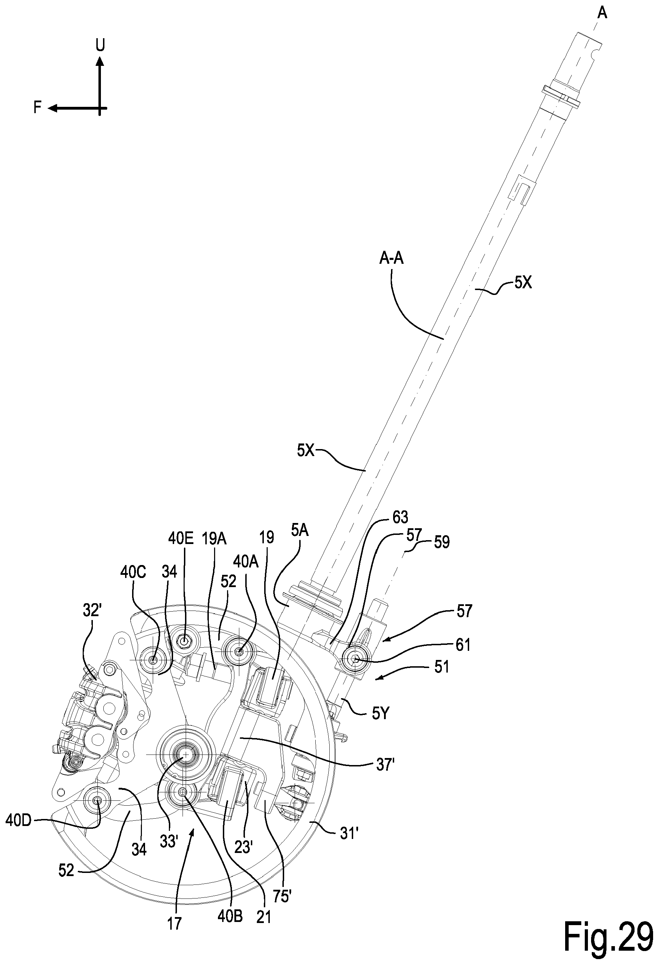

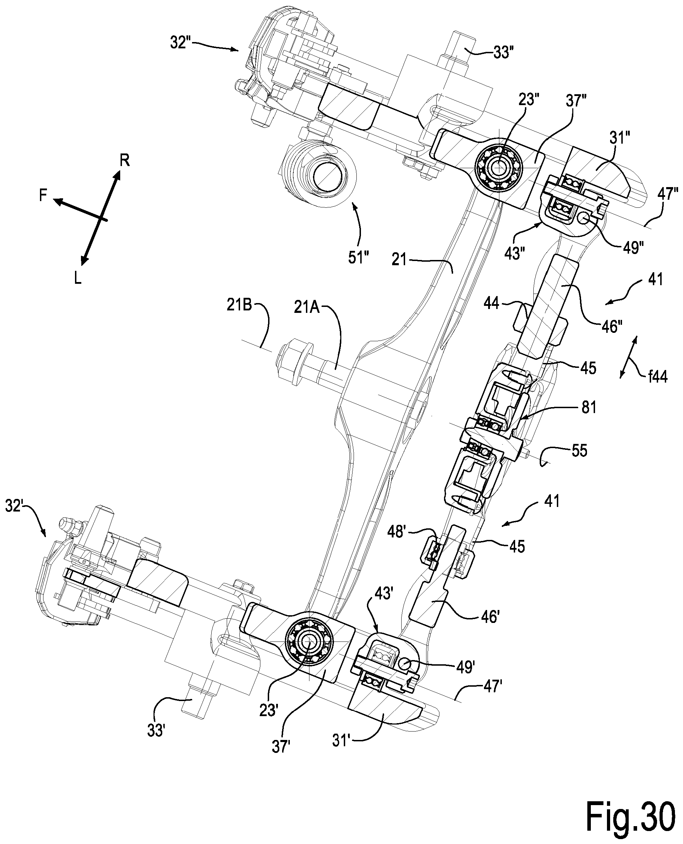

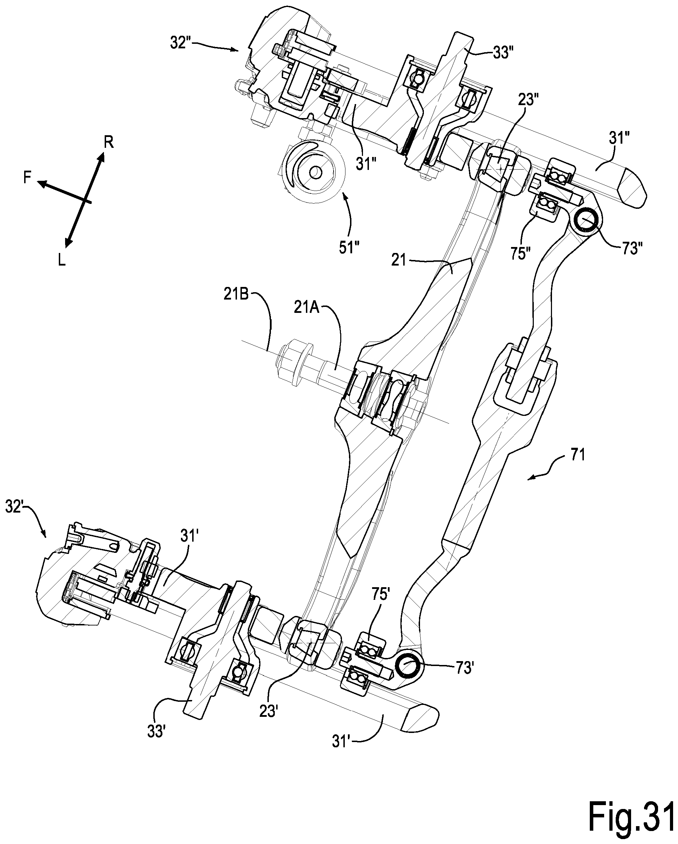

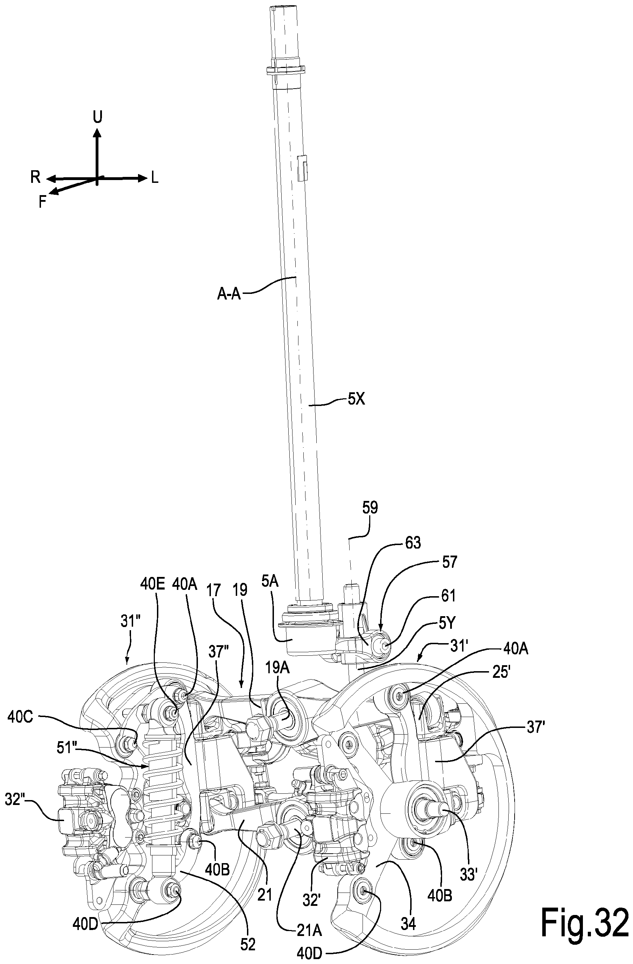

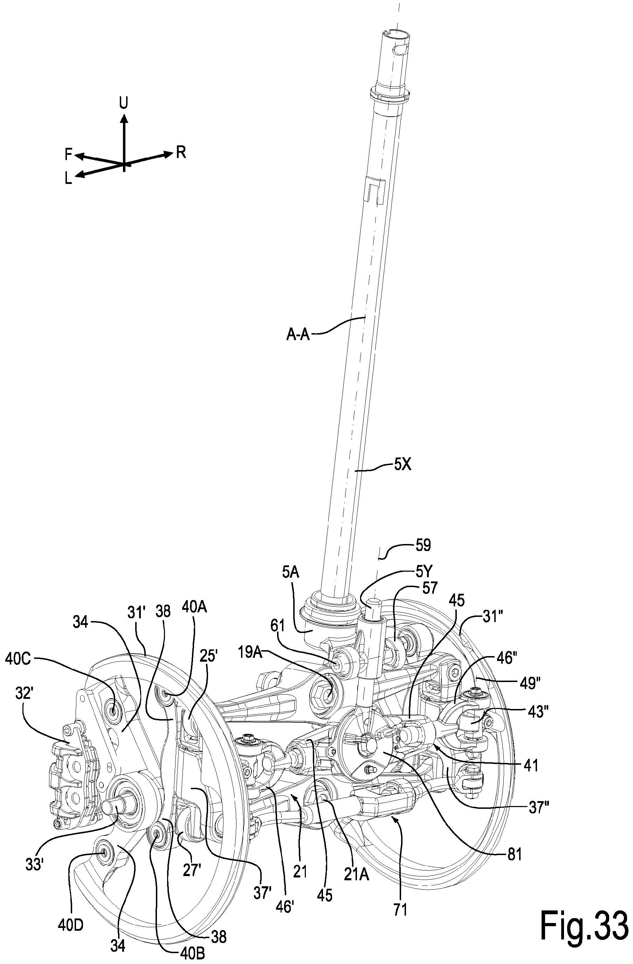

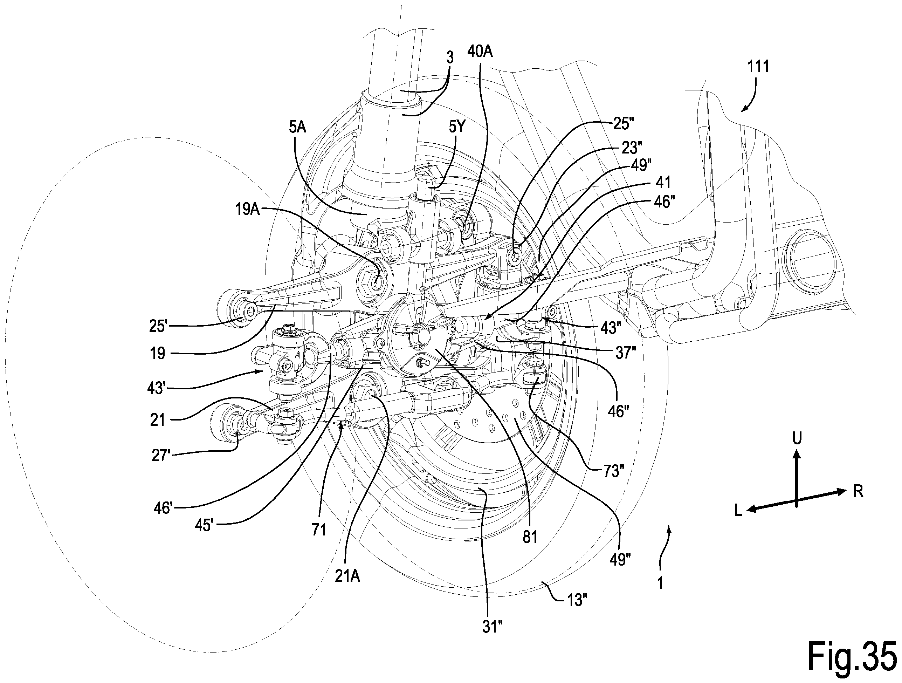

### Embodiment of Figs. 23 to 37

Figs. 23 to 37 illustrate a practical embodiment of the kinematic mechanism illustrated schematically in Fig.3 and described above. The same numbers indicate identical or equivalent parts to those of Fig.3, and in the series of Figs. 4 to 22, which will not be described again. Vice versa, the main parts that differ from the previous embodiment will be described hereunder.

The substantial difference between the embodiment of Figs. 4 to 22 and the embodiment of Figs. 23 to 37 consists in the different configuration of the suspension means, as already highlighted above in the description of Fig.3.

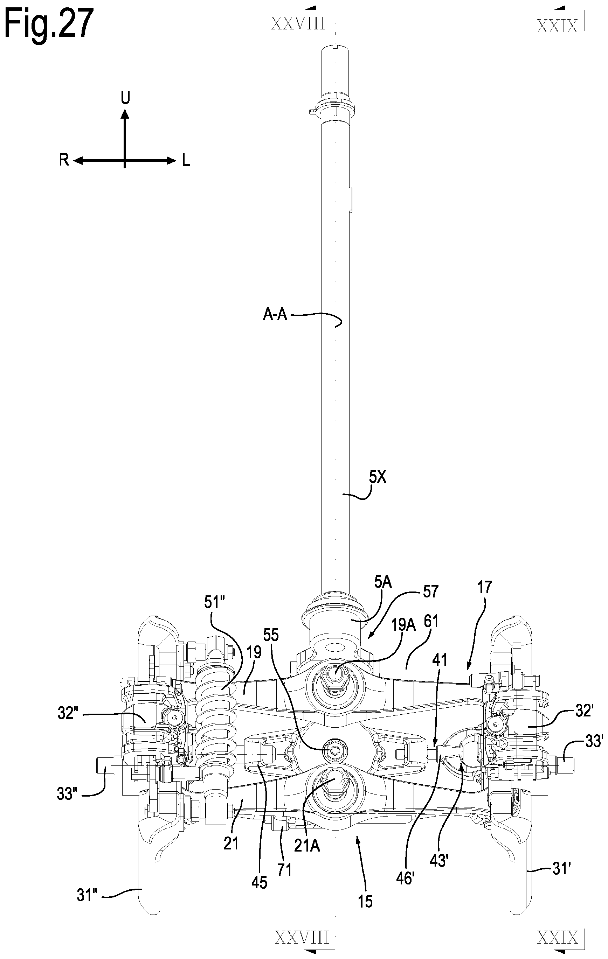

As schematically indicated in Fig.3, in the embodiment of Figs. 23 to 37 the suspension system of the front wheels 13', 13" comprises two shock absorber assemblies 51', 51", visible in particular in Figs. 27 to 32, 35 and 37, where the shock absorber assembly 51" is shown, while the shock absorber assembly 51', symmetrical thereto, has been omitted for greater clarity of the drawing. The first connecting bar 41 is joined, in an intermediate point, to the steering column 5 by means of a system with two degrees of freedom, which allows rotation movements around the axis 55 and an axis parallel to the longitudinal direction of the first connecting bar 41. A device for blocking the tilting movement 81 is associated with the mechanism with two degrees of freedom that joins the steering column 5 to the first connecting bar 41.

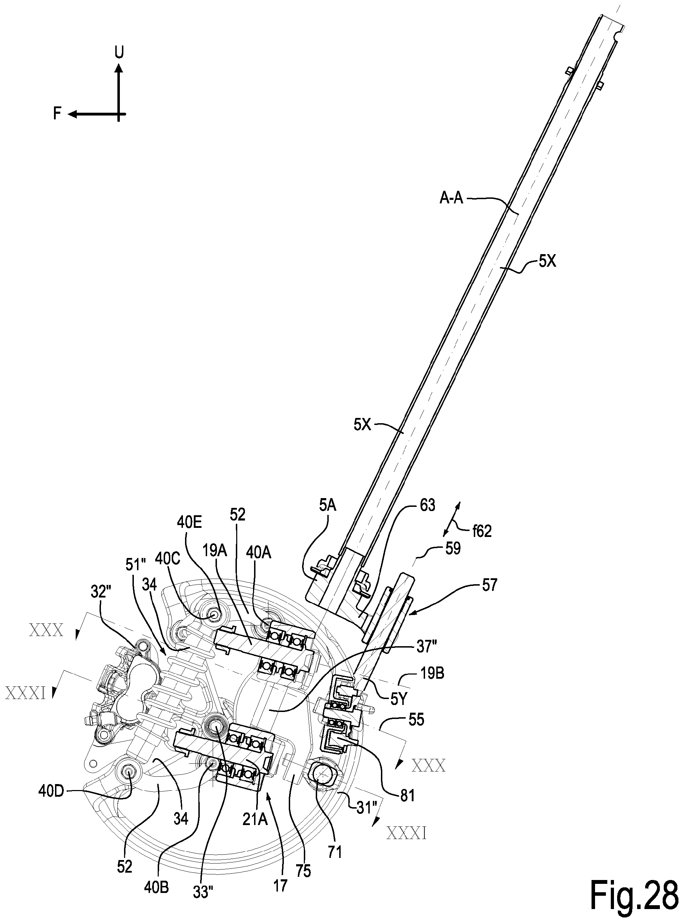

In this embodiment the steering column 5 comprises a first portion 5X rotatingly housed in the steering column tube 3, and a second portion 5Y. The two portions 5X, 5Y are joined to one another by a rigid connection 63 and by a mechanism 57 that allows the portion 5Y of the steering column 5 three degrees of freedom with respect to the connection 63. More precisely, a rotation around an axis 59 forming the longitudinal axis of the portion 5Y of the steering column 5; and a rotation around an axis 61 orthogonal to the axis 59 and parallel to the cross members 19, 21 of the four-bar linkage 17 can be performed when the vehicle 100 is in neutral position (zero tilting angle). Moreover, a translation movement according to arrow 62, which allows the first connecting bar 41 to move toward and away from the rigid connection 63, can be performed (see in particular Fig.28).

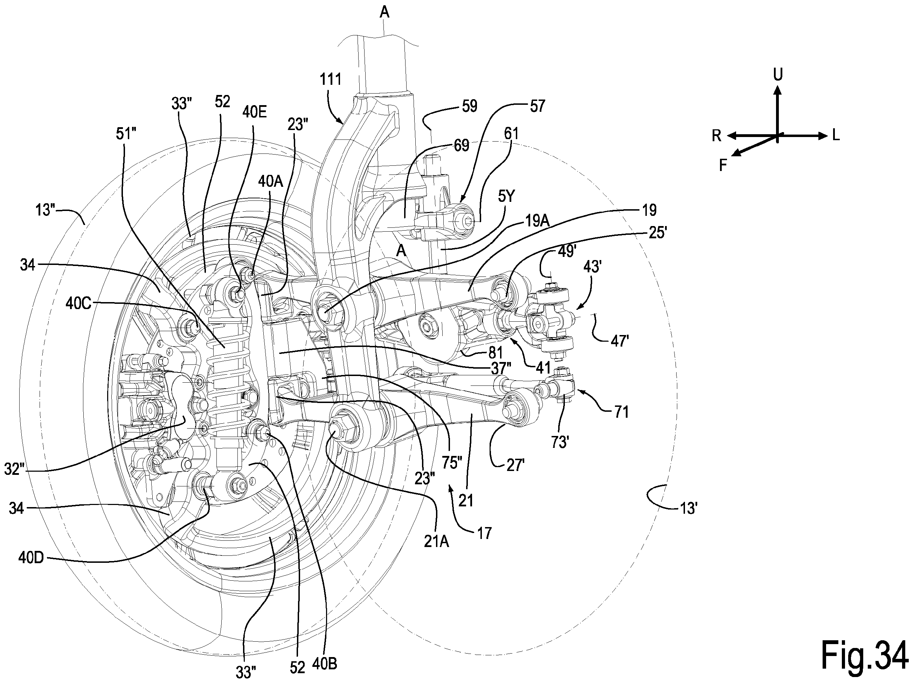

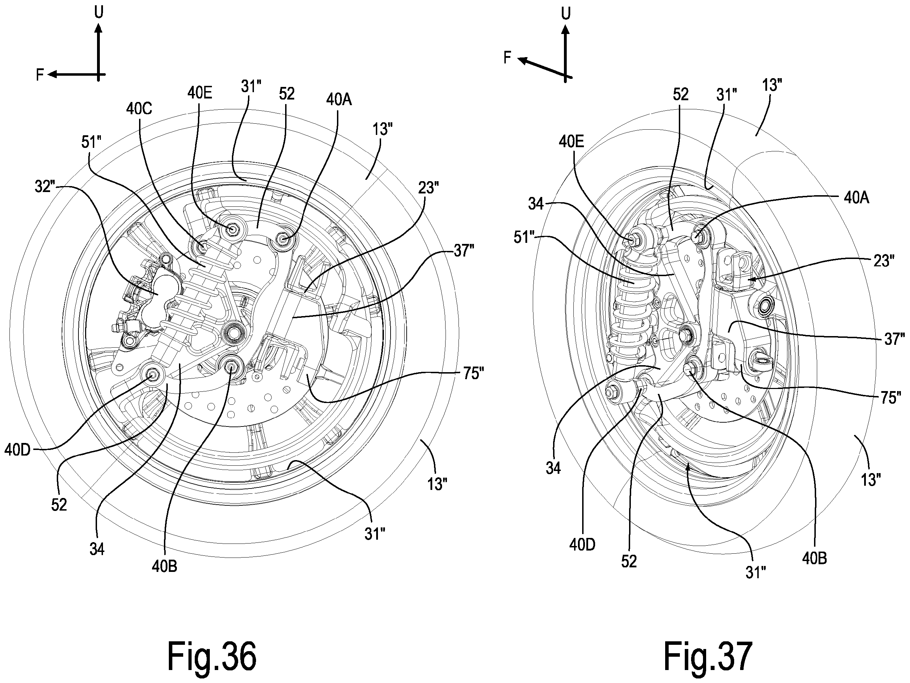

The shock absorber assemblies 51' and 51" each comprise a viscoelastic system (spring and damper). The connection of each shock absorber assembly 51', 51" to the related supporting member 31', 31" of the wheels 13', 13" and to the sleeve 37', 37" is different from the one indicated schematically in Fig.3. In fact, similarly to what is illustrated with reference to the embodiment of Figs. 4 to 22, also in the embodiment of Figs. 23 to 37 the supporting member 31', 31" is not provided with a simple rotation movement, but with a roto-translation movement on a plane. For this purpose, each shock absorber assembly 51', 51" is connected to one of the two rocker arms 52, each of which is hinged by means of hinges 40A, 4B to the respective sleeve 37', 37", as shown in particular in Fig. 34 for the shock absorber assembly 51". As well as being hinged to the sleeve 37' 37" in 40A, 40B, the two rocker arms 52 are also hinged to the supporting member 31', 31" of the respective wheel 13', 13" at hinges 40C, 40D. Each shock absorber assembly 51', 51" is connected to the respective hinge 40D and is also hinged in an intermediate point of the upper rocker arm 52, as indicated in 40E in Figs. 36 and 37. In this way, a variation in the length of the shock absorber assembly 51', 51" is obtained at the same time as an up-and-down movement of the wheel 13', 13" (and hence at the same time as a pivoting movement of the rocker arms 52).

The remaining parts of the embodiment of Figs. 23 to 25 are substantially the same as those already described with reference to Figs. 4 to 22, to achieve the same operating mode. In particular, the steering movement controlled by means of the handlebar 7 is transmitted by means of the steering column 5 (5X, 5Y, 57, 63) to the first connecting bar 41 and from this to the wheel 13". The steering movement of the wheel 13" is then transmitted to the supporting member 31' and hence to the wheel 13' by means of the second connecting bar 71. The joining element 44 between the two portions 41A, 41B of the connecting bar 41 allows limited extension and contraction movements of the first connecting bar 41 in the presence of unequal up-and-down movements for the two wheels 13' 13", so as to prevent an unwanted steering movement of a wheel caused by the difference of the two up-and-down movements around the axes 39', 39" of the two wheels 13', 13".

While the invention has been described in terms of various specific embodiments, it will be apparent to those skilled in the art that various modifications, changes and omissions are possible without departing from the scope of the claims.

## Claims

1. A forecarriage (1) of a motor vehicle (100) comprising:
a forecarriage frame (111);
a steering column tube (3), connected to the forecarriage frame (111);
a four-bar linkage (17) connected to the forecarriage frame (111) that supports, by means of a first supporting member (31') and a second supporting member (31"), a first front wheel (13') and a second front wheel (13") respectively;
a steering column (5) rotatingly housed in the steering column tube (3) and connected to a first connecting bar (41) which connects the first supporting member (31') and the second supporting member (31") to one another;
a suspension system (51; 51'; 51") allowing an up-and-down movement of the first front wheel (13') and of the second front wheel (13") with respect to the four-bar linkage (17);
**characterized in that:** the first connecting bar (41) has a variable length; a second connecting bar (71) connects the first supporting member (31') and the second supporting member (31") to one another; the second connecting bar (71) is connected at points which are neutral with respect to the up-and-down movements of the first front wheel (13') and the second front wheel (13").

2. The forecarriage (1) of claim 1, wherein the first connecting bar (41) has a length which is variable as a consequence of up-and-down movements of the first front wheel (13') and of the second front wheel (13") which are different from one another.

3. The forecarriage (1) of claim 1 or 2, wherein the suspension system comprises a single central shock absorber assembly (51) inter-connected between the steering column (5) and the first connecting bar (41), said shock absorber assembly being adapted to dampen up-and-down movements of the first front wheel (13') and of the second front wheel (13").

4. The forecarriage (1) of claim 1 or 2, wherein the suspension system comprises a first shock absorber assembly (51'), associated with the first supporting member (31') and adapted to dampen up-and-down movements of the first front wheel (13'), and a second shock absorber assembly (51"), associated with the second supporting member (31") and adapted to dampen up-and-down movements of the second front wheel (13").

5. The forecarriage (1) of claim 3, wherein the single central shock absorber assembly (51) is connected to the steering column (5) by means of a mechanism (57) with two degrees of freedom, in particular around two axes of rotation (61; 59), preferably orthogonal to one another.

6. The forecarriage (1) of claim 3 or 5, wherein the single central shock absorber assembly (51) is connected to the steering column (5) so as to be rotatable around a first, substantially horizontal axis (61), while looking at the vehicle in an erect position from the front, and a second axis (59) substantially parallel to the steering column.

7. The forecarriage (1) of claim 3 or 5 or 6, wherein the single central shock absorber assembly (51) is connected to the first connecting bar (41) by means of a mechanism with two degrees of freedom (53), in particular around two axes of rotation, preferably orthogonal to one another.

8. The forecarriage (1) of claim 7, wherein the first connecting bar (41) and the single central shock absorber assembly (51) are connected to one another so as to be rotatable with respect to one another around at least one of: an axis oriented in a longitudinal direction of the first connecting bar, and an axis (55) orthogonal to the longitudinal direction of the first connecting bar and to the longitudinal axis of the shock absorber assembly (51).

9. The forecarriage (1) of one or more of the previous claims, wherein the first connecting bar (41) comprises at least two bar portions (41A, 41B; 46', 46") connected to one another so as to be rotatable with respect to one another around a longitudinal axis of the first connecting bar (41).

10. The forecarriage (1) of one or more of the previous claims, wherein the first connecting bar (41) comprises at least two connecting bar portions (41A, 41B; 46', 46") connected to one another so as to allow elongation of the first connecting bar in the presence of an unequal up-and-down movement of the first front wheel (13') and of the second front wheel (13"), in particular with a mutual coupling between the two connecting bar portions provided with a bearing adapted to allow an axial mutual sliding of the two connecting bar portions, such as to achieve the length variation of the first connecting bar.

11. The forecarriage (1) of one or more of the previous claims, wherein the first connecting bar (4) is connected, at opposing ends (42', 42") thereof, to the first supporting member (31') and to the second supporting member (31"), respectively, by means of a mechanism (43', 43") allowing two degrees of freedom around two axes of rotation (47', 49'; 47", 49"), preferably orthogonal to one another and preferably orthogonal to the longitudinal direction of the first connecting bar (41).

12. The forecarriage (1) of one or more of the previous claims, wherein the four-bar linkage (17) comprises: a pair of cross members (19, 21), each hinged to the forecarriage frame (111) by means of respective mid-position hinges (19A, 19B), so as to be pivotable around parallel axes (19B, 21B), substantially lying on a center-line plane (M) of the forecarriage (111); and a pair of uprights (23', 23"), each hinged to a corresponding end of the two cross members by means of hinges (25', 25"; 27', 27") defining axes of rotation parallel to the axes (19B , 21B) around which the cross members (19, 21) rotate.

13. The forecarriage (1) of claim 12, wherein each of said first supporting member (31') and second supporting member (31") is connected to a respective upright (23'. 23") of the four-bar linkage (17), so as to be rotatable around a corresponding steering axis (35', 35") by means of a rotation command imparted by the steering column (5).

14. The forecarriage (1) of claim 13, wherein the steering axis (35', 35") of each supporting member (31', 31") is substantially coincident with a longitudinal axis of the respective upright (23'; 23").

15. The forecarriage (1) of one or more of the claims 12 to 14, wherein each supporting member (31'; 31") is connected to the corresponding upright (23'; 23") so as to be rotatable or roto-translatable around at least one springing axis (39', 39"; 40A, 40B), substantially orthogonal to the corresponding steering axis (35', 35"), to allow the up-and-down movement of the first and second front wheel (13', 13") with respect to the four-bar linkage.

16. The forecarriage (1) of one or more of the claims 12 to 15, wherein each supporting member (31', 31") is connected to the respective upright (23', 23") by means of a sleeve (37'37") supported on the upright (23' 23") rotatingly around the respective steering axis (35', 35").

17. The forecarriage (1) of claims 15 and 16, wherein each supporting member (31'; 31") is hinged to the respective sleeve (37', 37") around its springing axis (39', 39"; 40A, 40B).

18. The forecarriage (1) of claim 16 or 17, wherein the second connecting bar (71) is hinged at the two sleeves (37', 37") which connect the first supporting member (31') and the second supporting member (37") to the first upright (23') and to the second upright (23") of the four-bar linkage (17).

19. The forecarriage (1) of one or more of the previous claims, comprising a device (81) for blocking the tilting movement of the four-bar linkage (17).

20. The forecarriage (1) of claim 18, wherein the tilting movement blocking device (81) is configured so that, when activated, it prevents a relative rotation movement between the steering column (5) and the first connecting bar (41).

21. A motor vehicle (100) comprising a rear section (2) with at least one rear driving wheel (103) and a forecarriage (1) according to one or more of the previous claims.

## Patentansprüche

1. Vordergestell (1) eines Kraftfahrzeugs (100) mit:
einem Vordergestell-Rahmen (111),
einem Steuersäulen-Rohr (3), das mit dem Vordergestell-Rahmen (111) verbunden ist,
einem Vierstangenlenker (17), der mit dem Vordergestell-Rahmen (111) verbunden ist, der mittels eines ersten Trägerelements (31') und eines zweiten Trägerelements (31") ein erstes Vorderrad (13') bzw. ein zweites Vorderrad (13") trägt,
einer Steuersäule (5), die drehbar in dem Steuersäulen-Röhr (3) aufgenommen ist und mit einem ersten Verbindungsstab (41) verbunden ist, der das erste Trägerelement und das zweite Trägerelement (31") miteinander verbindet,
einem Aufhängungssystem (51; 51'; 51"), die eine Auf- und Abbewegung des ersten Vorderrades (13') und des zweiten Vorderrades (13") mit Bezug auf den Vierstangenlenker (17) ermöglicht,
**dadurch gekennzeichnet, dass**: der erste Verbindungsstab (41) eine variable Länge aufweist, ein zweiter Verbindungstab (71) das erste Trägerelement (31') und das zweite Trägerelement (31") miteinander verbindet, der zweite Verbindungstab) (71) an Punkten verbunden ist, die neutral mit Bezug auf die Auf- und Abbewegungen des ersten Vorderrades (13') und des zweiten Vorderrades (13") sind.

2. Vordergestell nach Anspruch 1, wobei der erste Verbindungsstab (41) eine Länge aufweist, die als eine Konsequenz der Auf- und Abbewegungen des ersten Vorderrades (13') und des zweiten Vorderrades (13"), die sich voneinander unterscheiden, variabel ist.

3. Vordergestell (1) nach Anspruch 1 oder 2, wobei das Aufhängungssystem eine einzelne, zentrale Stoßdämpfer-Anordnung (51) aufweist, die zwischen der Steuersäule (5) und dem ersten Verbindungsstab (41) verbunden ist, wobei die Stoßdämpfer-Anordnung ausgebildet ist, um Auf- und Abbewegungen des ersten Vorderrades (13') und des zweiten Vorderrades (13') zu dämpfen.

4. Vordergestell (1) nach Anspruch 1 oder 2, wobei das Aufhängungssystem eine erste Stoßdämpfer-Anordnung (51') aufweist, die dem ersten Trägerelements (31') zugeordnet ist und ausgebildet ist, um Auf- und Abbewegungen des ersten Vorderrades (13') zu dämpfen, und eine zweite Stoßdämpfer-Anordnung (51"), die dem zweiten Trägerelement (31") angeordnet ist und ausgebildet ist, um die Auf- und Abbewegungen des zweiten Vorderrades (13") zu dämpfen.

5. Vordergestell (1) nach Anspruch 3, wobei die einzelne, zentrale Stoßdämpfer-Anordnung (51) mit der Steuersäule (5) mittels eines Mechanismus (57) mit zwei Freiheitsgraden verbunden ist, insbesondere um zwei Drehachsen (61; 59), vorzugsweise orthogonal zueinander.

6. Vordergestell (1) nach Anspruch 3 oder 5, wobei bei die einzelne, zentrale Stoßdämpfer-Anordnung (51) mit der Steuersäule (5) so verbunden ist, um um eine erste, im wesentlichen horizontale (61) Achse drehbar zu sein, wenn man das Fahrzeug in einer aufgestellten Position von vorn sieht, und einer zweiten Achse (59), die im Wesentlichen parallel zu der Steuersäule ist.

7. Vordergestell (1) nach Anspruch 3 oder 5 oder 6, wobei die einzelne, zentrale Stoßdämpfer-Anordnung (51) mit dem ersten Verbindungsstab (41) mittels eines Mechanismus mit zwei Freiheitsgraden (53) verbunden ist, insbesondere um zwei Drehachsen, vorzugsweise orthogonal zueinander.

8. Vordergestell (1) nach Anspruch 7, wobei der erste Verbindungsstab (41) und die einzelne, zentrale Stoßdämpfer-Anordnung (51) miteinander verbunden sind, um drehbar mit Bezug aufeinander um zumindest eine zu sein von: einer Achse, die in einer Längsrichtung des ersten Verbindungstabs angeordnet ist, und einer Achse (55), die orthogonal zu der Längsrichtung des ersten Verbindungsstabs und zu der Längsachse der Stoßdämpfer-Anordnung (51) ist.

9. Vordergestell (1) nach einem oder mehreren der vorstehenden Ansprüche, wobei der erste Verbindungstab (41) mindestens zwei Stabteile (41A, 41B; 46', 46") aufweist, die miteinander so verbunden sind, um mit Bezug aufeinander um die Längsachse des ersten Verbindungsstabs (41) drehbar zu sein.

10. Vordergestell (1) nach einem oder mehreren der vorstehenden Ansprüche, wobei der erste Verbindungsstab (41) mindestens zwei Verbindungstab-Teile (41A, 41B; 46', 46") aufweist, die miteinander verbunden sind, um eine Verlängerung des ersten Verbindungsstabs bei Vorhandensein einer ungleichmäßigen auf- und Abbewegung des ersten Vorderrades (13') und des zweiten Vorderrades (13") zu ermöglichen, insbesondere mit einer gegenseitigen Kopplung zwischen den beiden Verbindungsstab-Teilen, die mit einer Lager versehen ist, das eine gegenseitige axiale Verschiebung der beiden Verbindungstab-Teilen ermöglicht, um die Längenvariation des ersten Verbindungstabs zu erzielen.

11. Vordergestell (1) nach einem oder mehreren der vorstehenden Ansprüche, wobei der erste Verbindungstab (4) an seinen gegenüberliegenden Enden (42', 42") mit dem ersten Trägerelement (31') bzw. dem zweiten Trägerelement (31") durch einen Mechanismus (43', 43") verbunden ist, der zwei Freiheitsgrade um zwei Drehachsen (47', 49'; 47", 49") ermöglicht, vorzugsweise orthogonal zueinander und vorzugsweise orthogonal zu der Längsrichtung des ersten Verbindungstabs (41).

12. Vordergestell (1) nach einem oder mehreren der vorstehenden Ansprüche, wobei der Vierstangenlenker (17) aufweist: ein Paar von Querelementen (19, 21), die jeweils mit dem Vordergestell-Rahmen (111) mittels jeweiliger Mittenposition-Scharniere (19A, 90B) verbunden sind, um schwenkbar um parallele Achsen (19B, 21B) zu sein, die im Wesentlichen auf einer Mittellinie-Ebene (M) des Vordergestell 111) liegen, und mit einem Paar Ständer (23', 23"), die jeweils mit einem entsprechenden Ende der zwei Querelemente mittels Scharnieren (25', 25", 27', 27") angelenkt sind, die Drehachsen parallel zu den Achsen (19B, 21B) definieren, um die die Querelemente (19, 21) drehen.

13. Vordergestell (1) nach Anspruch 12, wobei jedes des ersten Trägerelements (31') und des zweiten Trägerelements (31") mit einem jeweiligen Ständer (23', 23") des Vierstangenlenkers verbunden ist, um so um eine entsprechende Steuerachse (35', 35") durch einen Drehbefehl, der von der Steuersäule (5) aufgegeben wird, drehbar zu sein.

14. Vordergestell (1) nach Anspruch 13, wobei die Steuerachse (35', 35") jedes Trägerelements (31', 31") im Wesentlichen mit einer Längsachse des jeweiligen Ständers (23', 23") übereinstimmt.

15. Vordergestell (1) nach einem oder mehreren der Ansprüche 12 bis 14, wobei jedes Trägerelements (31'; 31") mit dem entsprechenden Ständer (23'; 23") verbunden ist, um drehbar oder dreh-verschiebbar entlang mindestens einer Federungsachse (39', 39"; 40A, 40B) zu sein, vorzugsweise orthogonal zu der entsprechenden Steuerachse (35', 35"), um die Auf- und Abbewegung des ersten und des zweiten vorderen Rades (13', 13") mit Bezug auf den Vierstangenlenker zu ermöglichen.

16. Vordergestell (1) nach einem oder mehreren der Ansprüche 12 bis 15, wobei jedes Trägerelements (31', 31") mit dem jeweiligen Ständer (23', 23") mittels einer Hülse (37', 37") verbunden ist, die auf dem Ständer (23', 23") drehbar um die jeweilige Steuerachse (35', 35") getragen wird.

17. Vordergestell (1) nach Anspruch 15 und 16, wobei jedes Trägerelements (31'; 31") an die jeweilige Hülse (37', 37") um ihre Federungsachse (39', 39"; 40A, 40B) angelenkt ist.

18. Vordergestell (1) nach Anspruch 16 oder 17, wobei der zweite Verbindungsstab (71) an den beiden Hülsen (37', 37") angelenkt ist, die das erste Trägerelement (31') und das zweite Trägerelement (37") mit dem ersten Ständer (23') und dem zweiten Ständer (23") des Vierstangenlenker (17) verbinden.

19. Vordergestell (1) nach einem oder mehreren der vorstehenden Ansprüche mit einer Vorrichtung (81) zum Blockieren der Kippbewegung des Vierstangenlenker (17).

20. Vordergestell (1) nach Anspruch 18, wobai der Vorrichtung (81) zum Blockieren der Kippbewegung so ausgebildet ist, dass, wenn sie aktiviert ist, eine relative Drehbewegung zwischen der Steuersäule (5) und dem ersten Verbindungsstab (41) verhindert.

21. Kraftfahrzeug (100) mit einem hinteren Abschnitt (2) mit mindestens einem hinteren Antriebsrad (103) und einem Vordergestell (1) nach einem oder mehreren der vorstehenden Ansprüche.

## Revendications

1. Un avant-train (1) de véhicule à moteur (100) comprenant :
un cadre d'avant-train (111) ;
un tube de colonne de direction (3), connecté au cadre d'avant-train (111) ;
une liaison à quatre barres (17) connectée au cadre d'avant-train (111) et qui supporte, au moyen d'un premier organe de support (31') et d'un deuxième organe de support (31"), une première roue avant (13') et une deuxième roue avant (13"), respectivement ;
une colonne de direction (5) logée tournante dans le tube de colonne de direction (3) et connectée à une première barre de connexion (41) qui connecte le premier organe de support (31') et le deuxième organe de support (31") l'un à l'autre ;
un système de suspension (51 ; 51' ; 51") permettant un mouvement vers le haut et vers le bas de la première roue avant (13') et de la deuxième roue avant (13") par rapport à la liaison à quatre barres (17) ;
**caractérisé en ce que** : la première barre de connexion (41) a une longueur variable, une deuxième barre de connexion (71) connecte le premier organe de support (31') et le deuxième organe de support (31") l'un à l'autre ; la deuxième barre de connexion (71) est connectée à des endroits qui sont neutres par rapport aux mouvements vers le haut et vers le bas de la première roue avant (13') et de la deuxième roue avant (13").

2. L'avant-train (1) selon la revendication 1, dans lequel la première barre de connexion (41) a une longueur qui est variable en raison des mouvements vers le haut et vers le bas de la première roue avant (13') et de la deuxième roue avant (13") qui sont différentes l'une de l'autre.

3. L'avant-train (1) selon la revendication 1 ou 2, dans lequel le système de suspension comprend un ensemble central unique d'absorption de chocs (51) interconnecté entre la colonne de direction (5) et la première barre de connexion (41), ledit assemblage d'absorption de chocs étant apte à amortir les mouvements vers le haut et vers le bas de la première roue avant (13') et de la deuxième roue avant (13").

4. L'avant-train (1) selon la revendication 1 ou 2, dans lequel le système de suspension comprend un premier assemblage d'absorption de chocs (51') associé au premier organe de support (31') et apte à amortir les mouvements vers le haut et vers le bas de la première roue avant (13') et le deuxième ensemble d'absorption de chocs (51"), associé au deuxième organe de support (31") et apte à amortir des mouvements vers le haut et vers le bas de la deuxième roue avant (13").

5. L'avant-train (1) selon la revendication 3, dans lequel l'ensemble central unique d'absorption de chocs (51) est connecté à la colonne de direction (5) au moyen d'un mécanisme (57) à deux degrés de liberté, en particulier autour de deux axes de rotation (61 ; 59), de préférence perpendiculaires l'un à l'autre.

6. L'avant-train (1) selon la revendication 3 ou 5, dans lequel l'ensemble central unique d'absorption de chocs (51) est connecté à la colonne de direction (5) de façon à être tournant autour d'un premier axe sensiblement horizontal (61), lorsqu'on regarde le véhicule debout depuis l'avant, et un deuxième axe (59) sensiblement parallèle à la colonne de direction.

7. L'avant-train (1) selon la revendication 3 ou 5 ou 6, dans lequel l'ensemble central unique d'absorption de chocs (51) est connecté à une première barre de connexion (41) au moyen d'un mécanisme à deux degrés de liberté (53), en particulier autour de deux axes de rotation, de préférence perpendiculaires l'un à l'autre.

8. L'avant-train (1) selon la revendication 7, dans lequel la première barre de connexion (41) et l'assemblage central unique d'absorption de chocs (51) sont connectés l'un à l'autre de façon à être tournants l'un par rapport à l'autre autour d'au moins l'un des axes suivants : un axe orienté dans une direction longitudinale de la première barre de connexion, et un axe (55) perpendiculaire à la direction longitudinale de la première barre de connexion et l'axe longitudinal de l'ensemble d'absorption de chocs (51).

9. L'avant-train (1) selon l'une ou plusieurs des revendications précédentes, dans lequel la première barre de connexion (41) comprend au moins deux parties de barre (41A, 41B ; 46', 46") connectées l'une à l'autre de manière à être tournantes l'une par rapport à l'autre autour d'un axe longitudinal de la première barre de connexion (41).

10. L'avant-train (1) selon l'une ou plusieurs des revendications précédentes, dans lequel la première barre de connexion (41) comprend au moins deux parties de barre de connexion (41A, 41B ; 46', 46") connectées l'une à l'autre, de façon à permettre l'allongement de la première barre de connexion en présence d'un mouvement vers le haut et vers le bas inégal de la première roue avant (13') et de la deuxième roue avant (13"), en particulier avec un couplage mutuel entre les deux parties de barre de connexion muni d'un coussinet apte à permettre un coulissement axial l'une part rapport à l'autre des deux parties de barre de connexion, de sorte à permettre la variation de longueur de la première barre de connexion.

11. L'avant-train (1) selon l'une ou plusieurs des revendications précédentes, dans lequel la première barre de connexion (4) est connectée, à ses extrémités opposées (42', 42"), au premier organe de support (31') et au deuxième organe de support (31"), respectivement, au moyen d'un mécanisme (43', 43") permettant deux degrés de liberté autour de deux axes de rotation (47', 49' ; 47", 49"), de préférence perpendiculaires l'un à l'autre et de préférence perpendiculaires à la direction longitudinale de la première barre de connexion (41).

12. L'avant-train (1) selon l'une ou plusieurs des revendications précédentes, dans lequel la liaison à quatre barres (17) comprend : une paire d'organes transversaux (19, 21), chacun étant articulé au cadre d'avant-train (111) au moyen d'articulations respectives à mi-position (19A, 19B), de façon à être pivotables autour d'axes parallèles (19B, 21B), s'étendant sensiblement sur un plan de ligne centrale (M) de l'avant-train (111) ; et une paire de montants (23', 23") chacun étant articulé à une extrémité correspondante des deux organes transversaux au moyen d'articulations (25', 25" ; 27', 27") définissant des axes de rotation parallèles aux axes (19B, 21B) autour desquels les organes transversaux (19, 21) tournent.

13. L'avant-train (1) selon la revendication 12, dans lequel chacun desdits premier organe de support (31') et deuxième organe de support (31") est connecté à un montant respectif (23', 23") de la liaison à quatre barres (17), de façon à être tournant autour d'un axe de direction correspondant (35', 35") au moyen d'une commande de rotation transmise par la colonne de direction (5).

14. L'avant-train (1) selon la revendication 13, dans lequel l'axe de direction (35', 35") de chaque organe de support (31', 31") coïncide sensiblement avec un axe longitudinal du montant respectif (23' ; 23").

15. L'avant-train (1) selon l'une ou plusieurs des revendications 12 à 14, dans lequel chaque organe de support (31', 31") est connecté au montant correspondant (23', 23") de façon à être tournant ou roto-translatable autour d'au moins un axe de suspension (39', 39" ; 40A, 40B), sensiblement perpendiculaire à l'axe de direction correspondant (35', 35"), pour permettre le mouvement vers le haut et vers le bas des première et deuxième roues avant (13', 13") par rapport à la liaison à quatre barres.

16. L'avant-train (1) selon l'une ou plusieurs des revendications 12 à 15, dans lequel chaque organe de support (31', 31") est connecté au montant respectif (23', 23") au moins d'un manchon (37, 37") supporté sur le montant (23', 23") de manière tournante autour de l'axe de direction respectif (35', 35").

17. L'avant-train (1) selon les revendications 15 et 16, dans lequel chaque organe de support (31', 31") est articulé au manchon respectif (37', 37") autour de son axe de suspension (39', 39" ; 40A, 40B).

18. L'avant-train (1) selon la revendication 16 ou 17, dans lequel la deuxième barre de connexion (17) est articulée à deux manchons (37', 37") lesquels connectent le premier organe de support (31') et le deuxième organe de support (37") au premier montant (23') et au deuxième montant (23") de la liaison à quatre barres (17).

19. L'avant-train (1) selon l'une ou plusieurs des revendications précédentes, comprenant un dispositif (81) pour bloquer le mouvement de basculement de la liaison à quatre barres (17).

20. L'avant-train (1) selon la revendication 19, dans lequel le dispositif de blocage du mouvement de basculement (81) est configuré de sorte que, lorsqu'il est activé, il empêche un mouvement de rotation relatif entre la colonne de direction (5) et la première barre de connexion (41).

21. Un véhicule à moteur (100) comprenant une section arrière (2) avec un moins une roue motrice arrière (103) et un avant-train (1) selon l'une ou plusieurs des revendications précédentes.
